# EUROPEAN PATENT APPLICATION

(11) **EP 4 834 755 A1**
(43) Date of publication of application: **04.11.2026**
(21) Application number: 26167275.2
(22) Date of filing: 24.03.2026
(51) Int. Cl.: B64C 23/06, B64C 3/56

(54) **CAM DRIVEN LATCH PIN WITH BACKUP LOCK**

(30) Priority: 29.04.2025 US 202519193438
(71) Applicant: The Boeing Company, Arlington, VA 22202 (US)
(72) Inventor: Good, Mark Steven, Arlington VA, 22202 (US)
(74) Representative: Witte, Weller & Partner Patentanwälte mbB

(57) **Abstract**

A latching and locking system is disclosed that includes a latch pin that is actuated by using a slotted cam. The slotted cam shape can be optimized to minimize actuation forces while also being designed to not allow the latch pin to back drive the cam. The latching and locking system includes an assembly that has a secondary lock that is engaged by a separate actuation system. The latching and locking system includes interacting mechanical features to ensure that the lock cannot engage unless the latch is engaged and the latch cannot disengage unless all the locks are unlocked.

## Description

### FIELD

The present teachings relate generally to a latch pin, and more particularly, devices, systems, and methods for cam driven latch pin with backup lock.

### BACKGROUND

In today's commercial transport industry, it may be highly desirable to design aircraft configurations that may yield reduced fuel burn per seat-mile, as fuel burn per seat-mile may be a metric of fuel efficiency. Efficient aircraft configurations may be ever more important as fuel costs continue to increase. Aircraft aerodynamic drag and fuel burn may be generally reduced as the aspect ratio of the aircraft wing increases. Similarly, operating larger aircraft, carrying more passengers and payload may generally be more efficient between two destinations than flying several trips with smaller aircraft. Thus larger aircraft and aircraft with longer wing spans tend to be more efficient. However, taxiway spacing and gate locations for most airports were established without providing adequate spacing for aircraft with the longer wingspans that can be produced with today's technology.

Thus, a need exists to provide an aircraft that can benefit from a long wing span in flight, while being able to reduce the wing span while operating at an airport.

### SUMMARY

According to examples of the present disclosure, a latching and locking system is disclosed. The latching and locking system comprises a housing comprising a housing longitudinal aperture extending along and through housing and a housing transverse aperture extending below and along and through the housing; a latch pin sized to fit and move within the housing longitudinal aperture of the housing from a first unlatched position to a first latched position, wherein the latch pin comprises a first latch pin end having a latch pin edge portion and a second latch pin end; a first primary locking cam hinged by a primary hinge pin on a first exterior longitudinal surface of the housing that allows the first primary locking cam to move from a first unlocked position to a first locked position, wherein the first primary locking cam comprises a first open j-shaped or hook-shaped aperture with a first interior protrusion arranged at a first curve of the first open j-shaped or hook-shaped aperture; a second primary locking cam hinged by the primary hinge pin on a second exterior longitudinal surface of the housing that allows the second primary locking cam to move from a second unlocked position to a second locked position, wherein the second primary locking cam comprises a second open j-shaped or hook-shaped aperture with a second interior protrusion arranged at a second curve of the second open j-shaped or hook-shaped aperture; a secondary locking cam hinged by a second hinge pin on a first exterior transverse surface of the housing that allows the secondary locking cam to move from a secondary unlocked position to a secondary locked position, wherein the secondary locking cam comprises a fixed secondary locking cam end that is fixed by the second hinge pin and a movable secondary locking cam end having a terminal surface comprising a recessed portion that is contoured to mate with the latch pin edge portion of the latch pin; a tertiary locking cam hinged by the second hinge pin on the second exterior longitudinal surface of the housing that allows the tertiary locking cam to move from a first unlocked position to a first locked position that blocks the second primary locking cam from unlocking; and an inhibiting lever comprising a first inhibiting lever end that is contoured to mate with the recessed portion of the secondary locking cam end and a second inhibiting lever end, wherein the inhibiting lever rotates about an inhibiting lever axis that allows the inhibiting lever to move from a inhibit position to an uninhibit position, wherein the latch pin edge portion on the first latch pin end of the latch pin interacts with the inhibiting lever when the latch pin is in the unlatched position such that the inhibiting lever moves from the inhibit position to the uninhibit position.

Various additional features can be included in the latching and locking system including one or more of the following features. The hook, "j," or"J"-shape of the primary locking cams provides a benefit that the backdriving forces on the latch pin tends to drive the jam in the "locking" direction instead of the "unlocking" direction. The system can further comprise a first drivetrain that drives the latch pin, the first primary locking cam, and the second primary locking cam. The system can further comprise a second drivetrain that drives the second lock cam and the tertiary lock cam. The system can further comprise a first actuator configured to move the latch pin from the first unlatched position to the first latched position and the first primary locking cam and the second primary locking cam from the unlocked position to the locked position via actuating the latch pin, the first primary locking cam, and the second primary locking cam by the first drivetrain. The system can further comprise a second actuator configured to move the secondary lock cam and the tertiary lock cam from the first unlocked position to the first locked position via actuating the second drivetrain. The system can further comprise a first sensor configured to detect a position of the first actuator and the second drivetrain. The first primary locking cam and the second primary locking cam are mechanically joined by the primary hinge pin such that the first primary locking cam and the second primary locking cam rotate together. The secondary locking cam and the tertiary locking cam are mechanically joined by the second hinge pin such that the secondary locking cam and the tertiary locking cam rotate together. The latch pin latches a first fixed wingtip portion to a first folding wingtip portion. The system can further comprise a first roller bearing configured to connect the first primary locking cam to the first exterior longitudinal surface of the housing and a second roller bearing configured to connect the second primary locking cam to the second longitudinal surface of the housing. In some examples, stacked roller bearings on each side of the latch pin for a total of four roller bearings can be used, where one roller bearing is used for the slot in the housing, one roller bearing is used for the slot in the primary cam, and two are used because they may tend to spin in opposite directions.

According to examples of the present disclosure, a latching and locking system is disclosed that includes a latch pin that is actuated by using a slotted cam. The slotted cam shape can be optimized to minimize actuation forces while also being designed to not allow the latch pin to back drive the cam. The latching and locking system includes an assembly that has a secondary lock that is engaged by a separate actuation system. The latching and locking system includes interacting mechanical features to ensure that the lock cannot engage unless the latch is engaged and the latch cannot disengage unless all the locks are unlocked.

According to examples of the present disclosure, a latching and locking system including the present latch pin assemblies can be used for folding wing tips on airplanes where the airplane level has a centerline such that the latch pin motion is parallel to the hinge line of the folding structure. Multiple pin assemblies can be used for load path redundancy and the pin assemblies can be arranged end to end along a chord of a wing. The latch pins of the latching and locking system can be actuated a hydraulic or an electronical actuation system. The actuation system can move the latch pins perpendicular to a hydraulic line of action, which allows the total axial length of the latch pin assembly to be shorter. Alternative architectures actuate the latch pins using hydraulic pistons along the centerline of the latch pin motion. In an arrangement of multiple pins end to end, the total axial length of the latch pin assembly of the proposed concept to be shorter than previous, alternative architectures. This arrangement improves the integration of the assemblies between the front and rear spars of the wing, reducing the needs for fairings and inefficient structural load paths. The actuation system can move the latch pins into position with various locking cams inside the assembly. The actuation system can move the latch pins in and out of engagement along the centerline of the latch pin. In some examples, the shape of the cam prevents the latch pin from being able to backdrive the cam. Also, due to the interactions between the secondary lock cam and the primary locking cam, the mechanical interactions ensure that the steps to lock and latch the latch pin happen in the correct sequence. The latching and locking system can enable a folding wing tip on small airplanes, which would allow larger wingspans to fit in existing gates where longer wingspans save fuel. The latching and locking system can also enable a small airplane to have folding wing tips without a large performance penalty.

In some examples, the two latch cams, one on each side of the latch pin, extend/retract the latch pins and minimize side loads on the latch pins. The tertiary locking cam, or an interaction cam, blocks an outboard latch cam from unlatching the latch pin when lock cam is in a "locked" state. The primary and secondary locking cams block the latch pin from retracting and cannot be placed in "locked" position unless the latch pin is fully extended. The inhibit lever holds the primary and the secondary locking cams at the "unlocked but inhibited" position until the latch pin is fully retracted. One or more locking sensors can be used to monitor the state of the locks. The state of the one or more lock sensors can be categorized as latched and locked, unlocked but inhibited (latch pin is free to move aft, but has not fully retracted), and unlatched and unlocked. One or more latch motors can be used to drive the linkage driveline that engages/disengages the latch pins and primary locks. One or more lock motors can be used to drive the linkage driveline that engages/disengages the secondary and tertiary lock cams.

In some examples, the shape of the J-slot is designed such that backdriving forces tending to unlatch the latch pin would force the lock to be more locked. In some examples, the physical interaction of tertiary locking cam and the primary locking cams prohibits the tertiary locking cam from reaching the "locked" state unless the primary locking cams are first in the "locked" state. In some examples, the sensor monitoring the state of the tertiary locking cams can infer the state of the primary locking cam, which enables system to use or need fewer sensors. In some examples, the physical interaction of the secondary locking cam and the latch pin prohibits the secondary locking cam from reaching the "locked" state unless the latch pin in fully "latched." In some examples, the sensor that monitoring the state of the secondary locking cam can infer the state of the each latch pin, enabling fewer sensors to be used. In some examples, the secondary and tertiary locking cams are on the same shaft and rotate together, and there is physical interference between the tertiary and primary locking cam, and there if interference between the secondary locking cam and the latch pin such that monitoring the rotation of the secondary lock/tertiary common shaft is sufficient to know the state of the latch pin and all locks. In some examples, a drivetrain connects all secondary locking cams such that if one secondary locking cam in any of the assemblies cannot reach the "locked" state, the entire drivetrain cannot reach the "locked" position, thus ensuring one sensor can monitor the state of multiple latch subassemblies.

According to examples of the present disclosure, a method of latching and locking a locking system is disclosed. The method comprises receiving a command from a computer to change a state of a locking system from a unlatch and unlocked state to a latched and fully locked state; commanding, by the computer, a first actuator and a second actuator towards the latched and locked states; moving a latch pin and a first primary lock and a second primary lock to a latched state and a primary lock state and then moving a secondary lock and a tertiary lock to a secondary and a tertiary locked state; monitoring, by a sensor, a state of the secondary lock and the tertiary lock as the secondary lock and the tertiary lock reach the latched and fully locked state; and determining, by the computer, that the locking system is in the latched and fully locked state. In some examples, the locking system locks or unlocks a wingtip in a particular position relative to main body of an airplane wing.

According to examples of the present disclosure, a method of unlatching and unlocking a locking system is disclosed. The method comprises receiving, from a computer, a command to change a state of a locking system from latched and fully locked state to an unlatched and unlocked state; receiving, from the computer, a command to actuate a second actuator towards an unlocked state, which results in a secondary lock and a tertiary lock moving; stopping, due to physical interference between the secondary lock and an inhibit lever, the secondary lock and the tertiary lock, at an inhibited state; monitoring, by a sensor, a state of the secondary lock and the tertiary lock until the secondary lock and the tertiary lock reach the inhibited state; determining, by the computer, that the locking system is in the inhibited state and commanding, by the computer, a first actuator, to move towards the unlocked and unlatched state, which results in a primary lock and a latch pin moving; changing a state of an inhibit lever from an inhibit state to an uninhibit state due to physical interference between the latch pin and the inhibit lever; once the inhibit lever is changed to an unhibit state, removing interference with the secondary lock and the tertiary lock to continue to the uninhibited and unlocked state; monitoring, by the sensor, a state of the secondary lock the tertiary locks until the second lock and the tertiary lock reach the uninhibited and unlocked state; and determining, by the computer, that the locking system is in the uninhibited and unlocked state. In some examples, the locking system locks or unlocks a wingtip in a particular position relative to main body of an airplane wing.

Further, there is disclosed a latching and locking system comprising: a housing; a latch pin sized to fit and move within a housing longitudinal aperture of the housing from a first unlatched position to a first latched position; a primary locking cam comprising lock components arranged on both sides of the housing and arranged to move from a first unlocked position to a first locked position; a secondary locking cam arranged to move from a secondary unlocked position to a secondary locked position; a tertiary locking cam arranged to move from a first unlocked position to a first locked position that blocks the primary locking cam from unlocking; and an inhibiting lever arranged to rotate about an inhibiting lever axis that allows the inhibiting lever to move from a inhibit position to an uninhibit position; wherein the latch pin interacts with the inhibiting lever when the latch pin is in the unlatched position such that the inhibiting lever moves from the inhibit position to the uninhibit position.

Preferably, a first primary locking cam of the primary locking cam comprises a first open j-shaped or hook-shaped aperture with a first interior protrusion arranged at a first curve of the first open j-shaped or hook-shaped aperture, wherein preferably the second primary locking cam of the primary locking cam comprises a second open j-shaped or hook-shaped aperture with a second interior protrusion arranged at a second curve of the second open j-shaped or hook-shaped aperture.

Preferably, the system further comprises a first drivetrain that drives the latch pin, the first primary locking cam, and the second primary locking cam.

More preferably, the system further comprises a second drivetrain that drives the second lock cam and the tertiary lock cam.

In particular, the system further comprises a first actuator configured to move the latch pin from the first unlatched position to the first latched position and the first primary locking cam and the second primary locking cam from the unlocked position to the locked position via actuating the latch pin, the first primary locking cam, and the second primary locking cam by the first drivetrain.

Preferably, the system further comprises a second actuator configured to move the secondary lock cam and the tertiary lock cam from the first unlocked position to the first locked position via actuating the second drivetrain.

In particular, the system further comprises a sensor configured to detect a position of the first actuator and the second drivetrain.

Preferably, the first primary locking cam and the second primary locking cam are mechanically joined by the primary hinge pin such that the first primary locking cam and the second primary locking cam rotate together.

In particular, the secondary locking cam and the tertiary locking cam are mechanically joined by the primary hinge pin such that the secondary locking cam and the tertiary locking cam rotate together.

Preferably, the latch pin latches a first fixed wingtip portion to a first folding wingtip portion. In particular, the system further comprises a first roller bearing configured to connect the first primary locking cam to the first exterior longitudinal surface of the housing and a second roller bearing configured to connect the second primary locking cam to the second longitudinal surface of the housing.

Preferably, the first open j-shaped or hook-shaped aperture is shaped such that backdriving forces tending to unlatch the latch pin would increase a degree of locking provided by the first primary locking cam and the second primary locking cam.

In particular, a physical interaction of the tertiary locking cam and the first primary locking cam and the second primary locking cam prohibits the tertiary locking cam from reaching a locked state unless the first primary locking cam and the second primary locking cam are first in the locked state.

Preferably, the sensor monitors a state of the tertiary locking cam to infer a state of the first primary locking cam and the second primary locking cam.

In particular, a physical interaction of the secondary locking cam and the latch pin prohibits the secondary locking cam from reaching a locked state unless the latch pin in fully latched.

Further, there is disclosed a method of latching and locking a locking system, the method comprising: receiving a command from a computer to change a state of a locking system from a unlatch and unlocked state to a latched and fully locked state; commanding, by the computer, a first actuator and a second actuator towards the latched and locked states; moving a latch pin and a first primary lock and a second primary lock to a latched state and a primary lock state and then moving a secondary lock and a tertiary lock to a secondary and a tertiary locked state; monitoring, by a sensor, a state of the secondary lock and the tertiary lock as the secondary lock and the tertiary lock reach the latched and fully locked state; and determining, by the computer, that the locking system is in the latched and fully locked state.

Preferably, the locking system locks or unlocks a wingtip in a particular position relative to main body of an airplane wing.

Moreover, there is disclosed a method of unlatching and unlocking a locking system, the method comprising: receiving, from a computer, a command to change a state of a locking system from latched and fully locked state to an unlatched and unlocked state; receiving, from the computer, a command to actuate a second actuator towards an unlocked state, which results in a secondary lock and a tertiary lock moving; stopping, due to physical interference between the secondary lock and an inhibit lever, the secondary lock and the tertiary lock, at an inhibited state; monitoring, by a sensor, a state of the secondary lock and the tertiary lock until the secondary lock and the tertiary lock reach the inhibited state; determining, by the computer, that the locking system is in the inhibited state and commanding, by the computer, a first actuator, to move towards the unlocked and unlatched state, which results in a primary lock and a latch pin moving; changing a state of an inhibit lever from an inhibit state to an uninhibit state due to physical interference between the latch pin and the inhibit lever; once the inhibit lever is changed to an unhibit state, removing interference with the secondary lock and the tertiary lock to continue to the uninhibited and unlocked state; monitoring, by the sensor, a state of the secondary lock the tertiary lock until the second lock and the tertiary lock reach the uninhibited and unlocked state; and determining, by the computer, that the locking system is in the uninhibited and unlocked state.

Preferably, the locking system locks or unlocks a wingtip in a particular position relative to main body of an airplane wing.

The features and functions can be achieved independently in various aspects of the present disclosure or may be combined in yet other aspects in which further details can be seen with reference to the following description and drawings.

### BRIEF DESCRIPTION OF THE DRAWINGS

The novel features believed characteristic of the illustrative embodiments may be set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
FIG. 1A is a diagram of an aircraft embodying a wing fold system in a flight position in accordance with an illustrative embodiment;
FIG. 1B is a diagram of an aircraft embodying a wing fold system in a folded position in accordance with an illustrative embodiment;
FIG. 2 is a wing with a wing fold system in accordance with an illustrative embodiment;
FIG. 3 is a block diagram of a wing with a wing fold system with a latching and locking system in accordance with an illustrative embodiment;
FIG. 4A shows a rear perspective view of the latching and locking system and FIG. 4B shows a front perspective view of the latching and locking system according to examples of the present disclosure;
FIG. 5 show a front perspective view of the latching and locking system with housing 302 in phantom according to examples of the present disclosure;
FIG. 6A shows a side view of secondary locking cam and FIG. 6B shows a front perspective view of secondary locking cam according to examples of the present disclosure. FIG. 7 shows latch pin according to examples of the present disclosure.
FIG. 8A shows a rear perspective view of the latching and locking system with housing 302 in phantom and latch pin in a fully retracted position according to examples of the present disclosure;
FIG. 8B shows a top view of the latching and locking system with housing in phantom and latch pin in a fully retracted position according to examples of the present disclosure;
FIG. 8C shows a side view of the latching and locking system with housing in phantom and latch pin in a fully retracted position according to examples of the present disclosure;
FIG. 8D shows a rear view of the latching and locking system with housing in phantom and latch pin in a fully retracted position according to examples of the present disclosure;
FIG. 9A shows a rear perspective view of the latching and locking system with housing in phantom and latch pin in a fully extended position according to examples of the present disclosure;
FIG. 9B shows a top view of the latching and locking system with housing in phantom and latch pin 308 in a fully extended position according to examples of the present disclosure;
FIG. 9C shows a side view of the latching and locking system with housing in phantom and latch pin 308 in a fully extended position according to examples of the present disclosure;
FIG. 9D shows a rear view of the latching and locking system with housing in phantom and latch pin in a fully extended position according to examples of the present disclosure.
FIG. 10A shows a front perspective view of housing and FIG. 10B shows a rear perspective view of housing according to examples of the present disclosure;
FIG. 11A shows a front perspective view of a series of latching and locking systems and FIG. 11B shows a rear perspective view of latching and locking systems according to examples of the present disclosure;
FIG. 12A shows a rear perspective view of the latching and locking system with the housing in phantom and showing a first bearing and FIG. 12B shows the view of FIG. 12A with the first primary locking cam removed and the first bearing and the second bearing shown according to examples of the present disclosure;
FIG. 13A shows a side view of the latching and locking system with the housing in phantom and showing a first bearing and FIG. 13B shows the view of FIG. 13A with the first primary locking cam removed and the first bearing and the second bearing shown according to examples of the present disclosure;
FIG. 14A shows a front perspective view of a series of latching and locking systems in a fully extended position and FIG. 14B shows a rear perspective view of latching and locking systems in a fully extended position according to examples of the present disclosure;
FIG. 15A shows a front perspective view of a series of latching and locking systems in a first partial retracted position and FIG. 15B shows a rear perspective view of latching and locking systems in a first partial retracted position according to examples of the present disclosure;
FIG. 16A shows a front perspective view of a series of latching and locking systems in a second subsequent partial retracted position and FIG. 16B shows a rear perspective view of latching and locking systems in a second subsequent partial retracted position according to examples of the present disclosure;
FIG. 17A shows a front perspective view of a series of latching and locking systems in a third subsequent partial retracted position and FIG. 17B shows a rear perspective view of latching and locking systems in a third subsequent partial retracted position according to examples of the present disclosure;
FIG. 18A shows a front perspective view of a series of latching and locking systems in a fourth subsequent partial retracted position and FIG. 18B shows a rear perspective view of latching and locking systems in a fourth subsequent partial retracted position according to examples of the present disclosure;
FIG. 19A shows a front perspective view of a series of latching and locking systems in a fifth subsequent partial retracted position and FIG. 19B shows a rear perspective view of latching and locking systems in a fifth subsequent partial retracted position according to examples of the present disclosure;
FIG. 20A shows a front perspective view of a series of latching and locking systems in a sixth subsequent partial retracted position and FIG. 20B shows a rear perspective view of latching and locking systems in a sixth subsequent partial retracted position according to examples of the present disclosure;
FIG. 21A shows a front perspective view of a series of latching and locking systems in a seventh subsequent partial retracted position and FIG. 21B shows a rear perspective view of latching and locking systems in a seventh subsequent partial retracted position according to examples of the present disclosure;
FIG. 22A shows a front perspective view of a series of latching and locking systems in an eighth subsequent partial retracted position and FIG. 22B shows a rear perspective view of latching and locking systems in an eighth subsequent partial retracted position according to examples of the present disclosure;
FIG. 23A shows a front perspective view of a series of latching and locking systems in a ninth subsequent partial retracted position and FIG. 23B shows a rear perspective view of latching and locking systems in a ninth subsequent partial retracted position according to examples of the present disclosure;
FIG. 24A shows a front perspective view of a series of latching and locking systems in a tenth subsequent partial retracted position and FIG. 24B shows a rear perspective view of latching and locking systems in a tenth subsequent partial retracted position according to examples of the present disclosure;
FIG. 25A shows a front perspective view of a series of latching and locking systems in a fully retracted position and FIG. 25B shows a rear perspective view of latching and locking systems in a fully retracted position according to examples of the present disclosure;
FIG. 26 shows a side view of the latching and locking system showing the arrangement of the hook, "J," or "j"-shaped on front primary locking cam according to examples of the present disclosure;
FIG. 27A and FIG. 27B show a flowchart for a method according to examples of the present disclosure;
FIG. 28 is an illustration of an aircraft manufacturing and service method; and
FIG. 29 is an illustration of an aircraft in which an illustrative embodiment may be implemented.

### DETAILED DESCRIPTION

Exemplary aspects will now be described more fully with reference to the accompanying drawings. Examples of the disclosure, however, can be embodied in many different forms and should not be construed as being limited to the examples set forth herein. Rather, these examples are provided so that this disclosure will be thorough and complete, and will fully convey the scope to those skilled in the art. In the drawings, some details may be simplified and/or may be drawn to facilitate understanding rather than to maintain strict structural accuracy, detail, and/or scale. Reference will now be made in detail to the present teachings, examples of which are illustrated in the accompanying drawings. In the drawings, like reference numerals have been used throughout to designate identical elements. In the following description, reference is made to the accompanying drawings that form a part thereof, and in which is shown by way of illustration specific examples of practicing the present teachings. The following description is, therefore, merely exemplary.

According to examples of the present disclosure, latch means a mechanical element that withstands flight loads that tend to move the folding element. Latched means a state of system where the latch elements are engaged such that hinge cannot move. Lock means a mechanical element that ensures the latch cannot disengage. Locked means a state of locking system where the locks are blocking the latches from disengaging from the "latched" state. In some examples, in the latch and lock system, the secondary lock shall not reach "locked" state unless the pin is fully extended, the primary lock is in a "locked" state. The primary lock shall not reach a "locked" state unless pin is in a "latched" state. The primary lock shall not be able to unlock unless the secondary lock is in a "unlocked, unlatch inhibited" state. The secondary lock shall not reached a "unlocked and unlatched" position unless all latch pins are fully retracted.

Winglets extending vertically from aircraft wingtips have improved aircraft fuel efficiency without significantly increasing wing span. However, efficiency added by winglets may not be as beneficial as that provided by extending the wing span. Some military aircraft may fold wingtips up, but current wing fold technology may produce weight, drag, reliability, or maintenance access penalties that are not efficient or desirable, and may lack desirable redundancy features.

Unless otherwise noted and where appropriate, similarly named features and elements of illustrative embodiments of one figure of the disclosure correspond to and embody similarly named features and elements of embodiments of the other figures of the disclosure.

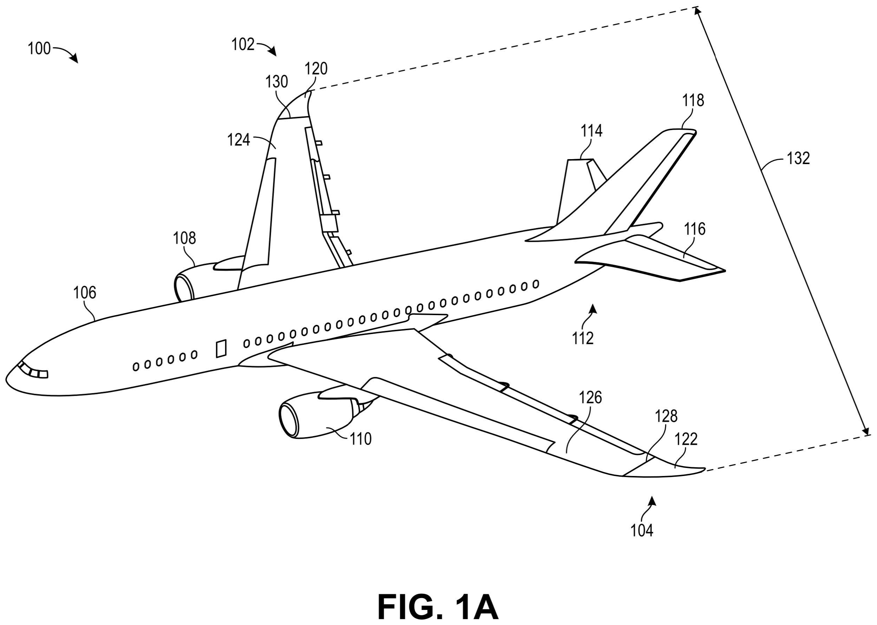

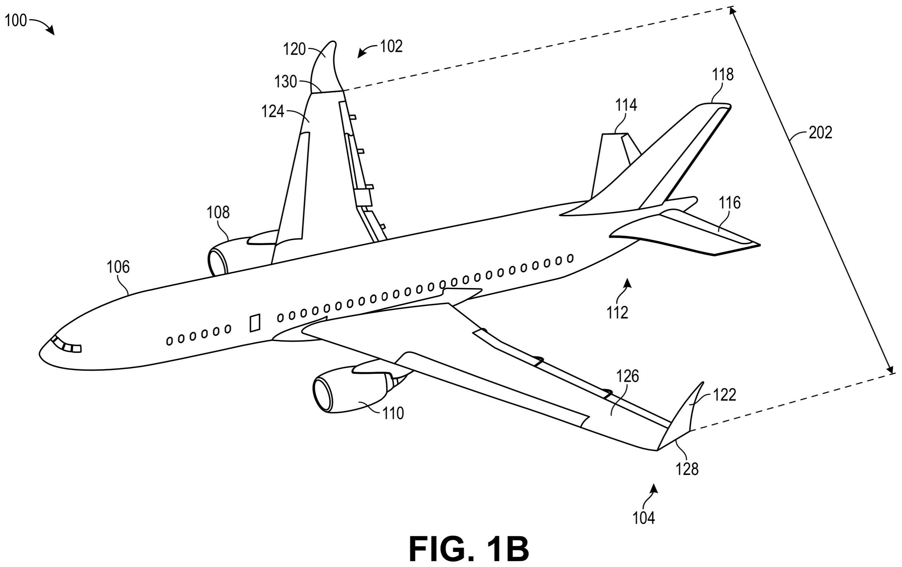

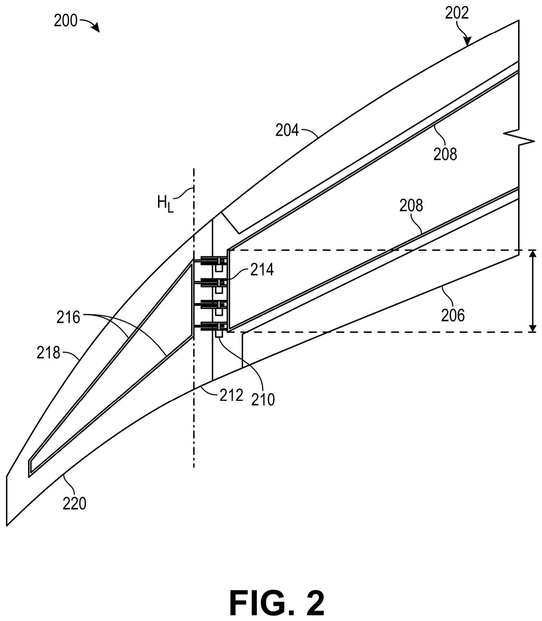

FIG. 1A is a diagram of an aircraft embodying a wing fold system in a flight position in accordance with an illustrative embodiment. FIG. 1B is a diagram of an aircraft embodying a wing fold system in a folded position in accordance with an illustrative embodiment. FIG. 2 is a wing with a wing fold system in accordance with an illustrative embodiment.

With reference now to the figures, and in particular, with reference to FIG. 1A and FIG. 1B, an illustration of an aircraft is depicted in accordance with an illustrative embodiment. Aircraft 100 may be an example of an aircraft in which a wing fold system may be implemented in accordance with an illustrative embodiment. In this illustrative example, aircraft 100 may include wing 102 and wing 104 attached to body 106; engine 108 attached to wing 102; and engine 110 attached to wing 104. FIG. 1A depicts wings 102 and 104 of aircraft 100 in flight position and FIG. 1B depicts wings 102 and 104 of aircraft 100 in folded position.

Wing 102 may include a fixed portion 124 and an unfixed portion 120. Fixed portion 124 may be an inboard portion of the wing fixed to body 106. Similarly, wing 104 may include a fixed portion 126 and an unfixed portion 122. Wing 102 may include wing fold system 130 that may move unfixed portion 120 with respect to fixed portion 124. Wing 104 may include wing fold system 128 that may move unfixed portion 122 with respect to fixed portion 126. FIG. 1A and FIG. 1B show wing fold system 128 and 130 of aircraft 100 in flight position, with wingspan 132 such that aircraft 100 may be ready for flight. The wingspan 202 is reduced from wingspan 132 for operation at an airport. Body 106 may connect to tail section 112. Horizontal stabilizer 114, horizontal stabilizer 116, and vertical stabilizer 118 may be attached to tail section 112 of body 106.

FIG. 2 shows part of folding wing 200 with fixed wing section or main wing 202 and foldable wing portion 218 that is hinged along hinge line 212 (the line H_{L}) and can be secured (latched and locked) or unsecured (unlatched and unlocked) by the latching and locking system as disclosed herein. The main wing 202 includes slats 204, 206 and wing spars 208. The latching and locking system The main wing 202 is joined to foldable wing portion 218 through latch pin assemblies 210 at hinge interface 214. The foldable wing portion 218 includes folding tip spars 216 and folding wing tip 220.

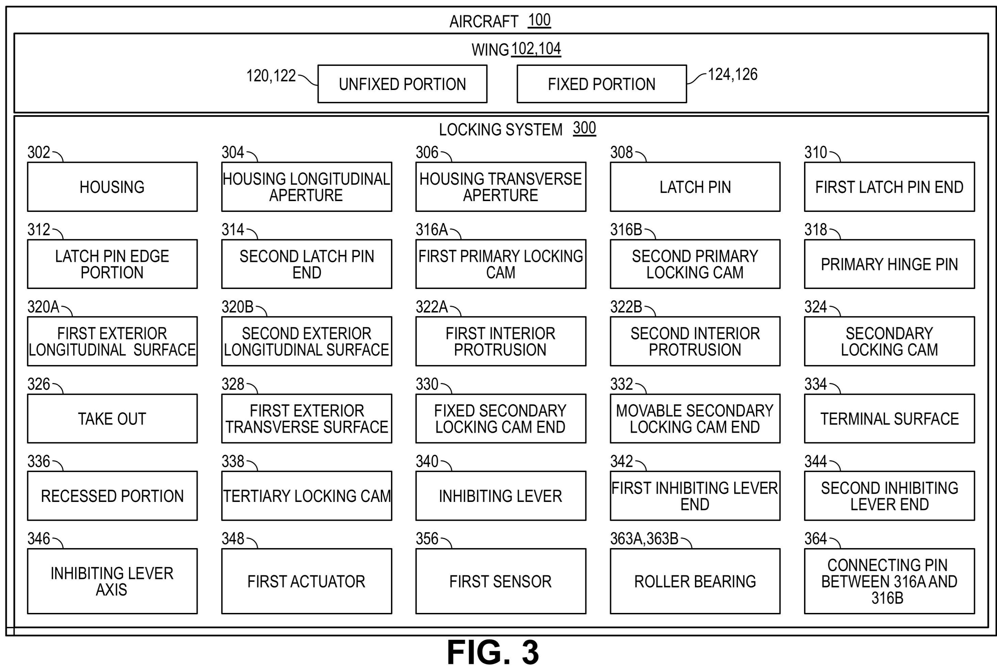

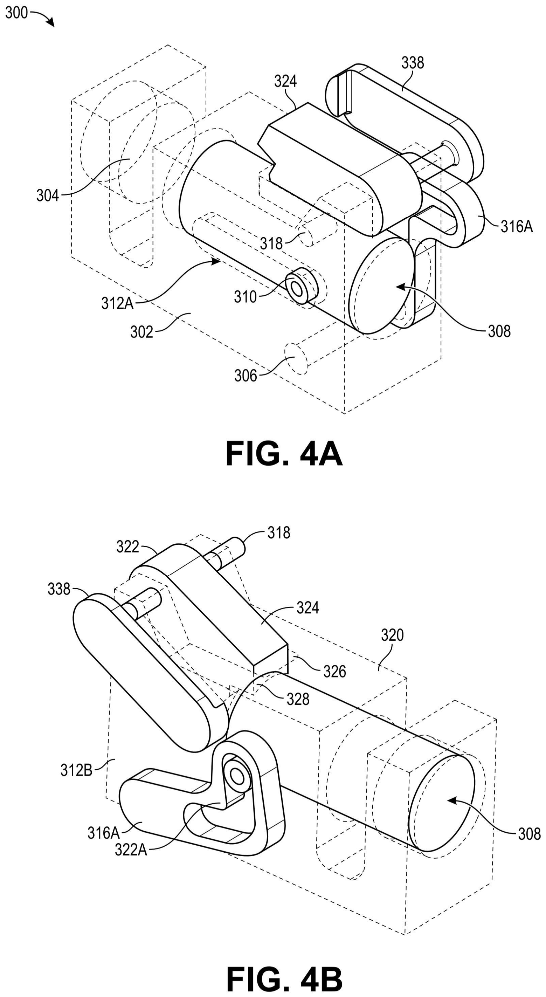

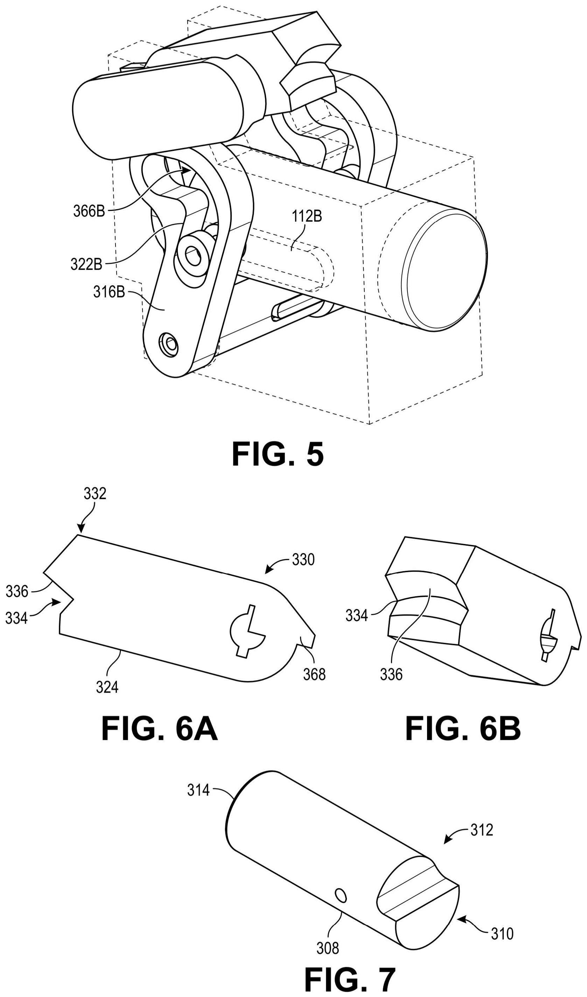

FIG. 3 is a block diagram of a wing with a wing fold system with a latching and locking system in accordance with an illustrative embodiment. FIG. 4A shows a rear perspective view of the latching and locking system and FIG. 4B shows a front perspective view of the latching and locking system according to examples of the present disclosure. FIG. 5 show a front perspective view of the latching and locking system with housing 302 in phantom according to examples of the present disclosure. FIG. 6A shows a side view of secondary locking cam 324 and FIG. 6B shows a front perspective view of secondary locking cam 324 according to examples of the present disclosure. FIG. 7 shows latch pin 308 according to examples of the present disclosure.

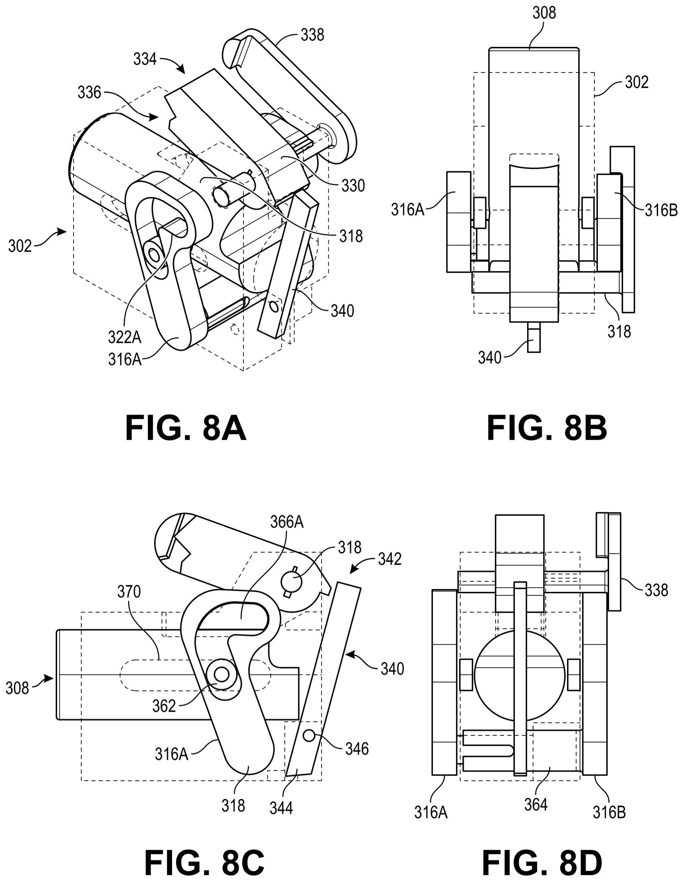

FIG. 8A shows a rear perspective view of the latching and locking system with housing 302 in phantom and latch pin 308 in a fully retracted position according to examples of the present disclosure. FIG. 8B shows a top view of the latching and locking system with housing 302 in phantom and latch pin 308 in a fully retracted position according to examples of the present disclosure. FIG. 8C shows a side view of the latching and locking system with housing 302 in phantom and latch pin 308 in a fully retracted position according to examples of the present disclosure. FIG. 8D shows a rear view of the latching and locking system with housing 302 in phantom and latch pin 308 in a fully retracted position according to examples of the present disclosure.

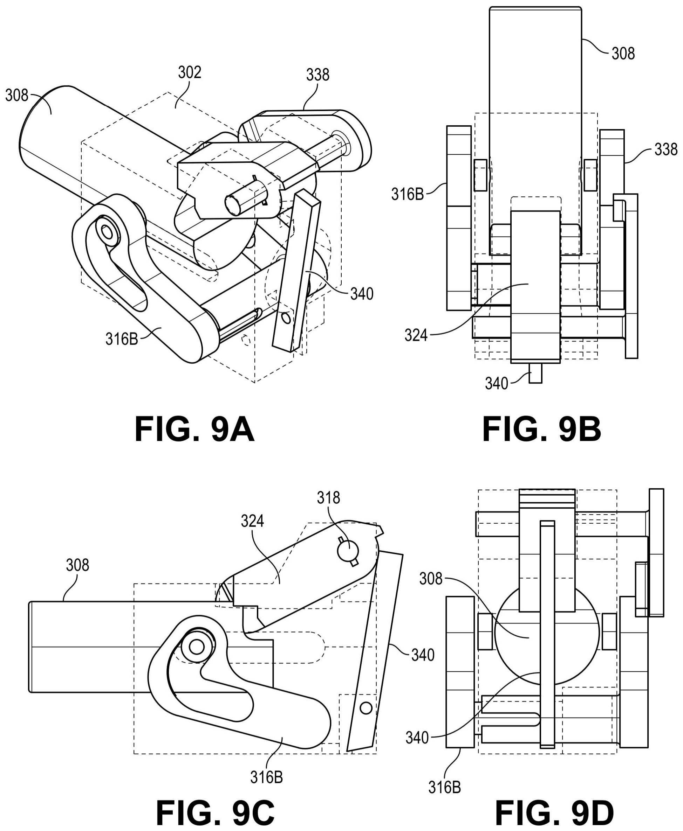

FIG. 9A shows a rear perspective view of the latching and locking system with housing 302 in phantom and latch pin 308 in a fully extended position according to examples of the present disclosure. FIG. 9B shows a top view of the latching and locking system with housing 302 in phantom and latch pin 308 in a fully extended position according to examples of the present disclosure. FIG. 9C shows a side view of the latching and locking system with housing 302 in phantom and latch pin 308 in a fully extended position according to examples of the present disclosure. FIG. 9D shows a rear view of the latching and locking system with housing 302 in phantom and latch pin 308 in a fully extended position according to examples of the present disclosure.

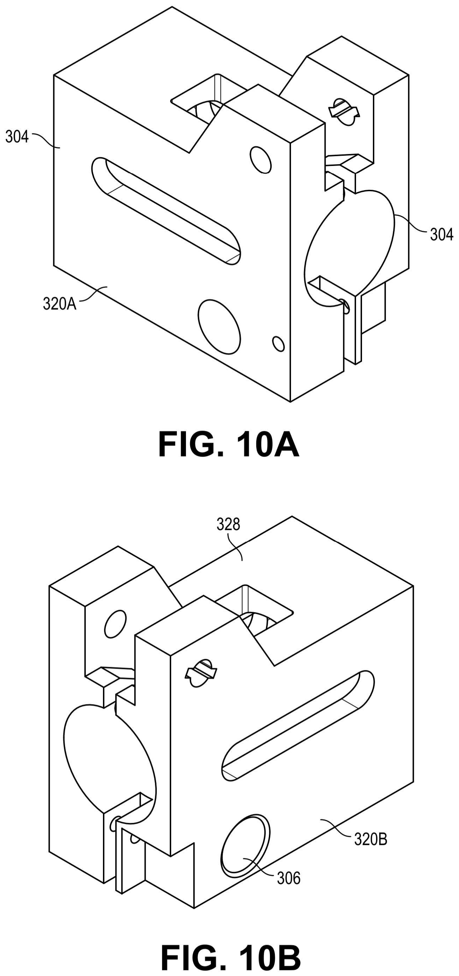

FIG. 10A shows a front perspective view of housing 302 and FIG. 10B shows a rear perspective view of housing 302 according to examples of the present disclosure.

The illustration of wing 200 in FIG. 2 is not meant to imply physical or architectural limitations to the manner in which an illustrative embodiment may be implemented. Other components in addition to or in place of the ones illustrated may be used. Some components may be unnecessary. Also, the blocks may be presented to illustrate some functional components. One or more of these blocks may be combined, divided, or combined and divided into different blocks when implemented in an illustrative embodiment. Alternative examples may have links, joints, and locks in addition to those described and still be within the scope of one or more illustrative embodiments.

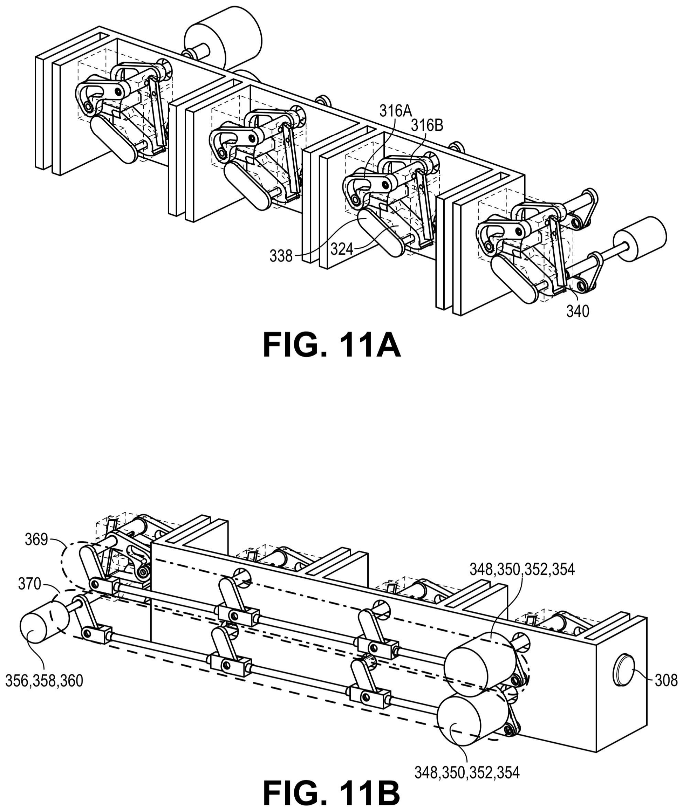

With reference to FIG. 3 through FIG. 26, illustrations of a wing fold system are depicted in accordance with an illustrative embodiment. Wing fold system may be used by aircraft 100 of FIG. 1A and FIG. 1B and embody wing fold system shown in block form in FIG. 3.

Latching and locking system 300 comprises housing 302 comprising housing longitudinal aperture 304 extending along and through housing 302 and housing transverse aperture 306 extending below and along and through housing 302.

Latching and locking system 300 also comprises latch pin 308 sized to fit and move within housing longitudinal aperture 304 of housing 302 from a first unlatched position to a first latched position. Latch pin 308 comprises first latch pin end 310 having latch pin edge portion 312 and second latch pin end 314. In some examples, latch 308 can comprise a internal longitudinal core member, such as a pin within latch pin 308, to provide reinforcement to latch pin 308 in case latch pin 308 becomes damaged or fractures.

Latching and locking system 300 also comprises first or primary locking cam or first lock, primary lock comprising first primary locking cam 316A and second primary locking cam 316B arranged on opposite sides of housing 302. First primary locking cam 316A hinged by primary hinge pin 364 and/or second hinge pin 362 on first exterior longitudinal surface 320A of housing 302 that allows first primary locking cam 316A to move from a first unlocked position to a first locked position. First primary locking cam 316A comprises a first open j-shaped or hook-shaped aperture with first primary locking cam aperture 366A and first interior protrusion 322A arranged at a first curve of the first open j-shaped or hook-shaped aperture.

Latching and locking system 300 also comprises second primary locking cam 316B hinged by primary hinge pin 364 on second exterior longitudinal surface 320B of housing 302 that allows second primary locking cam 316B to move from a second unlocked position to a second locked position. Second primary locking cam 316B comprises second open j-shaped or hook-shaped aperture with second primary locking cam aperture 366B and second interior protrusion 322B arranged at a second curve of the second open j-shaped or hook-shaped aperture.

Latching and locking system 300 also comprises secondary lock or secondary locking cam 324 hinged by primary hinge pin 318 on first exterior transverse surface 328 of housing 302 that allows secondary locking cam 324 to move from a secondary unlocked position to a secondary locked position. Secondary locking cam 324 comprises fixed secondary locking cam end 330 with a secondary locking cam end protrusion 368 that is fixed by primary hinge pin 318 and movable secondary locking cam end 332 having terminal surface 334 comprising recessed portion 336 that is contoured to mate with latch pin edge portion 312 of latch pin 308.

Latching and locking system 300 also comprises tertiary lock or tertiary locking cam 338 hinged by primary hinge pin 318 on second exterior longitudinal surface 320B of housing 302 that allows tertiary locking cam 338 to move from a first unlocked position to a first locked position that blocks second primary locking cam 316B from unlocking.

Latching and locking system 300 also comprises inhibiting lever 340 comprising first inhibiting lever end 342 that is contoured to mate with recessed portion 336 of secondary locking cam end 324 and second inhibiting lever end 344. Inhibiting lever 340 rotates about inhibiting lever axis 346 that allows inhibiting lever 340 to move from an inhibit position to an uninhibit position.

Latch pin edge portion 312 on first latch pin end 310 of latch pin 308 interacts with inhibiting lever 340 when latch pin 308 is in the unlatched position such that the inhibiting lever 340 moves from the inhibit position to the uninhibit position.

Latching and locking system 300 also comprises first drivetrain 354 that drives latch pin 308, first primary locking cam 316A, and second primary locking cam 316B. Latching and locking system 300 also comprises second drivetrain 355 that drives second lock cam 324 and tertiary lock cam 338.

Latching and locking system 300 also comprises first actuator 348 configured to move latch pin 308 from the first unlatched position to the first latched position and the first primary locking cam 316A and second primary locking cam 316B from the unlocked position to the locked position via actuating latch pin 308, first primary locking cam 316A, and second primary locking cam 316B by first drivetrain 354.

Latching and locking system 300 also comprises second actuator 350 configured to move secondary lock cam 324 and tertiary lock cam 338 from the first unlocked position to the first locked position via actuating second drivetrain 355.

Latching and locking system 300 also comprises sensor 352 configured to detect a position of first actuator 348 and second drivetrain 355. In some examples, sensor 352 monitors the state of the secondary lock/tertiary lock drive train, such as first drivetrain 354 and second drivetrain 355. Since there are physical interferences between secondary locking cam 324 and latch pin 308 and tertiary locking cam 338 with first primary locking cam 316A and second primary locking cam 316B, when secondary locking cam 324 and tertiary locking cam 338 are in the "locked" state it is possible to infer than latch pin 308 is fully extended and first primary locking cam 316A and second primary locking cam 316B are "locked." In the retracted state, because of the interference between latch pin 308 and inhibiting lever 340, if secondary locking cam 324 is in the "unhibit" position, latch pin 308 must be fully retracted.

First primary locking cam 316A and second primary locking cam 316B are mechanically joined by primary hinge pin 364 such that first primary locking cam 316A and second primary locking cam 316B rotate together.

Secondary locking cam 324 and tertiary locking cam 338 are mechanically joined by primary hinge pin 318 such that secondary locking cam 324 and tertiary locking cam 338 rotate together.

Latch pin 308 latches a first fixed wingtip portion to a first folding wingtip portion.

Latching and locking system 300 further comprises first roller bearing 362A configured to connect first primary locking cam 316A to first exterior longitudinal surface 320A of housing 302 and second roller bearing 362B configured to connect second primary locking cam 316B to second longitudinal surface 320B of housing 302.

One benefit of the physical interference between tertiary lock 338 and primary lock 316B is that tertiary lock 338 cannot reached the "locked" state unless second primary locking cam 316B is in the locked state. Therefore, in one example, the state of each tertiary locking cam 338 is monitored by sensor 352 to determine that each of second primary locking cam 316B is in a locked state. Also, terminal surface 334 of movable secondary locking cam end 332 cannot reach the locked state unless latch pin 308 is in the fully latched state. Therefore, if each terminal surface 334 is locked, each latch pin 308 much be fully latched.

Also, through interaction between first latch pin end 310 of the latch pin 308 with inhibiting lever 340 that only occurs when the latch pin 308 is in the fully unlatched state to move inhibiting lever 340 to the uninhibit position, which then via interaction between inhibiting lever 340 and the tertiary locking cam 338 to allow tertiary locking cam 338 to rotate to even further to a "unlatched" state, by monitoring each of tertiary locking cam 338, is it possible to know when all the latch pins 308 are fully unlatched. That is useful because it would not be desirable to start moving the wing tip upwards if some of the pins are only partially unlatched.

Second drivetrain 355 physically interconnects each tertiary locking cam 338 and each terminal surface 334 of the movable secondary locking cam end 332. If any of tertiary locking cam 338 cannot reach the desired state, second drivetrain 355 is blocked. Therefore, the state of each tertiary locking cam 338 and terminal surface 334 can be monitored by the sensor 352 that monitors the position of the links. In one example, the sensor 352 is located at the end of second driveline 355 at the point farthest from the first actuator 348 in order to not be fooled by a disconnect. In some examples, first drivetrain 354 and second drivetrain 355 comprises a series of connected linkages.

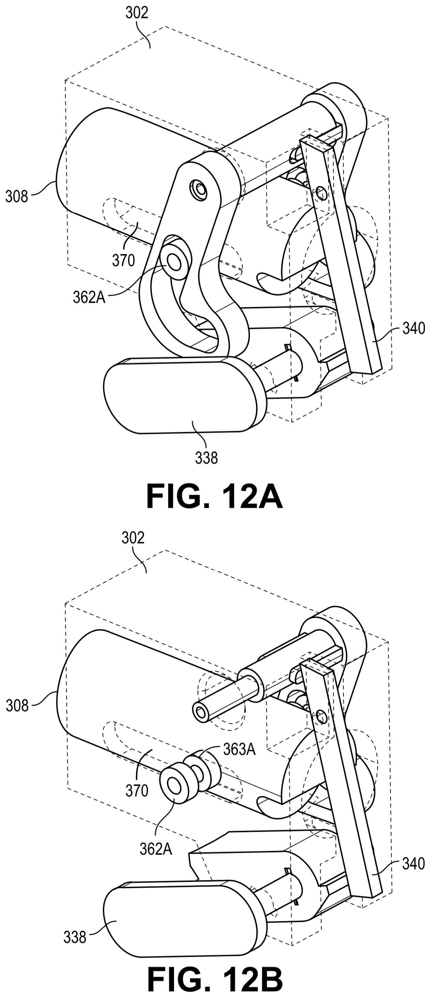

FIG. 12A shows a rear perspective view of the latching and locking system with housing 302 in phantom and showing a first bearing and FIG. 12B shows the view of FIG. 12A with the first primary locking cam removed and the first external roller bearing and the second bearing shown according to examples of the present disclosure. First external roller bearing 362A and second external roller bearing 362B are paired on both sides of housing 302. Similarly, first internal roller bearing 363A and second internal roller bearing 363B are paired on both sides of housing 302. First external roller bearing 362A rides in the J-shaped slot in first primary locking cam 316A and second external roller bearing 362B rides in the J-shaped slot in second primary locking cam 316B on the other side of housing 302. First internal roller bearing 363A rides in first straight slot 370 in housing 302 and second internal roller bearing 363B rides in second straight slot 372 on the other side of housing 302.

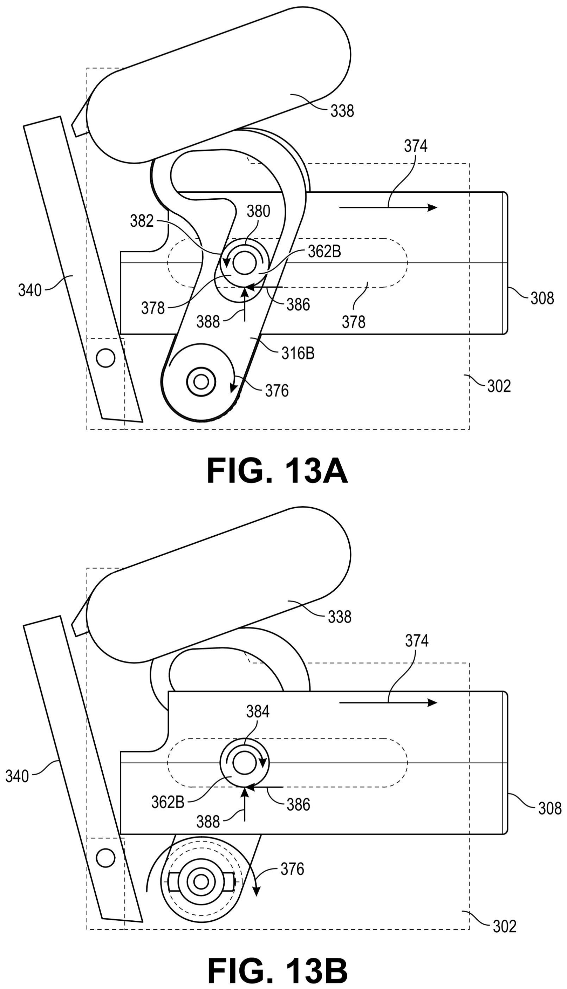

FIG. 13A shows a side view of the latching and locking system with the housing in phantom and showing a first bearing and FIG. 13B shows the view of FIG. 13A with the first primary locking cam removed and the first bearing and the second bearing shown according to examples of the present disclosure. In FIG. 13A and FIG. 13B, various directions are shown due to motion of latch pin 308. In FIG. 13A, as latch pin 308 moves from left to right in FIG. 13A as shown as latch pin motion 374, torque, in a clockwise direction as indicated by clockwise torque arrow 376, on second primary locking cam 316B causes second external roller bearing 362B to rotate in a counterclockwise direction as indicated by counterclockwise bearing arrow 378 due to friction force 380 and normal force 382 at an interface between an external surface of second external roller bearing 362B and the J-shaped slot of second primary locking cam 316B. In FIG. 13B, as latch pin 308 moves from left to right in FIG. 13B as shown as latch pin motion 374, torque, in a clockwise direction as indicated by clockwise torque arrow 376, on second primary locking cam 316B causes second internal roller bearing 363B to rotate in a clockwise direction as indicated by clockwise bearing arrow 384 due to friction force 386 and normal force 388 at an interface between an external surface of second internal roller bearing 363B and internal surface of second straight slot 372.

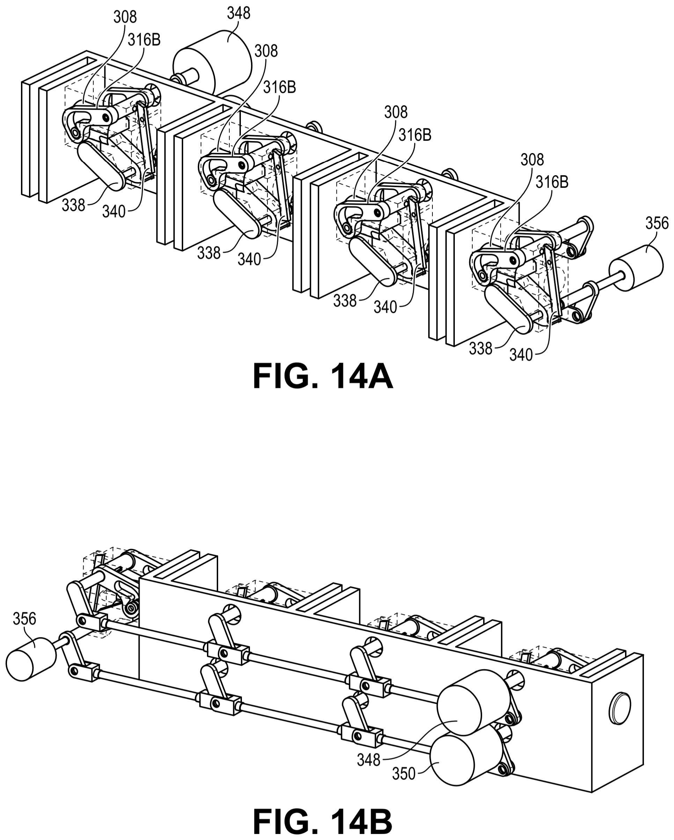

FIG. 14A shows a front perspective view of a series of latching and locking systems and FIG. 14B shows a rear perspective view of latching and locking systems according to examples of the present disclosure. As shown in FIG. 14A, the series of latching and locking systems in a fully extended position and FIG. 14B shows a rear perspective view of latching and locking systems in a fully extended position according to examples of the present disclosure. As shown in FIG. 14A and FIG. 14B, the latching and locking system is in the latched and locked state where the lock cams are engaged and latch pin 308 is fully extended.

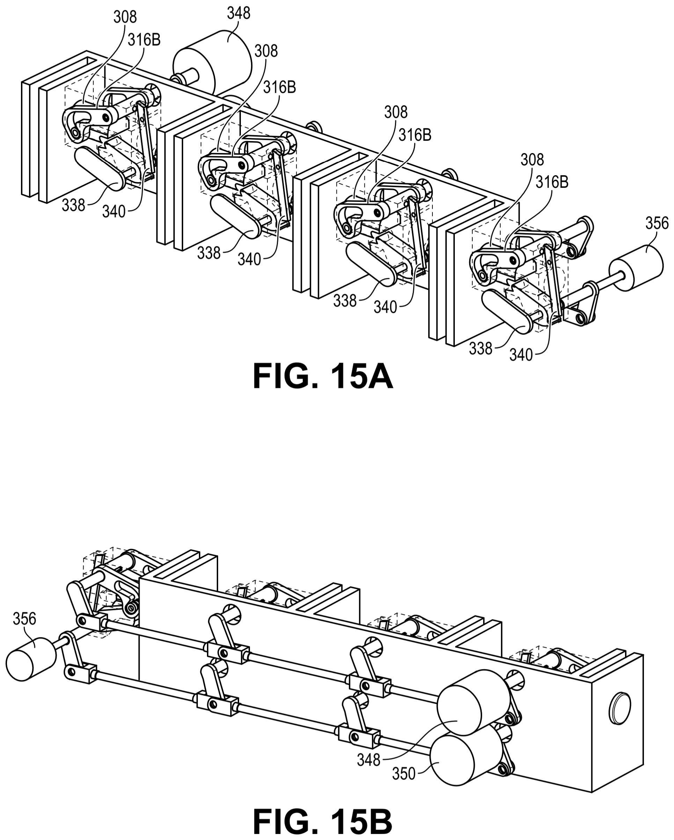

FIG. 15A shows a front perspective view of a series of latching and locking systems in a first partial retracted position and FIG. 15B shows a rear perspective view of latching and locking systems in a first partial retracted position according to examples of the present disclosure. As shown in FIG. 15A and FIG. 15B, the latching and locking system is in the unlocking state where one or more of first primary locking cam 316A, second primary locking cam 316B, secondary locking cam 324, or tertiary locking cam 338 begin to disengage and sensor 352 monitors the lock linkage driveline starting motion and provides feedback to electronics indicating that one or more of first primary locking cam 316A, second primary locking cam 316B, secondary locking cam 324, or tertiary locking cam 338 have not yet reached the "unlocked but inhibited" state, and first actuator 348 rotates first drivetrain 354 and second drivetrain 355 that disengages one or more of first primary locking cam 316A, second primary locking cam 316B, secondary locking cam 324, or tertiary locking cam 338.

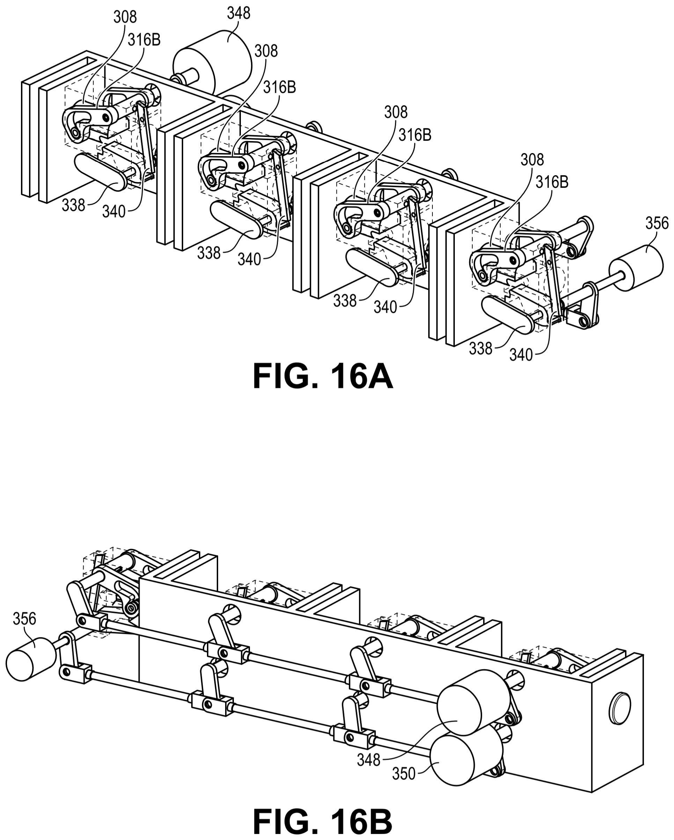

FIG. 16A shows a front perspective view of a series of latching and locking systems in a second subsequent partial retracted position and FIG. 16B shows a rear perspective view of latching and locking systems in a second subsequent partial retracted position according to examples of the present disclosure. As shown in FIG. 16A and FIG. 16B, the latching and locking system is in the unlocking state where one or more of first primary locking cam 316A, second primary locking cam 316B, secondary locking cam 324, or tertiary locking cam 338 begin to disengage and sensor 352 monitor the lock first drivetrain 354 and second drivetrain 355 starting motion and provides feedback to electronics indicating that one or more of first primary locking cam 316A, second primary locking cam 316B, secondary locking cam 324, or tertiary locking cam 338 have not yet reached the "unlocked but inhibited" state, and first actuator 348 rotates first drivetrain 354 and second drivetrain 355 that disengages one or more of first primary locking cam 316A, second primary locking cam 316B, secondary locking cam 324, or tertiary locking cam 338.

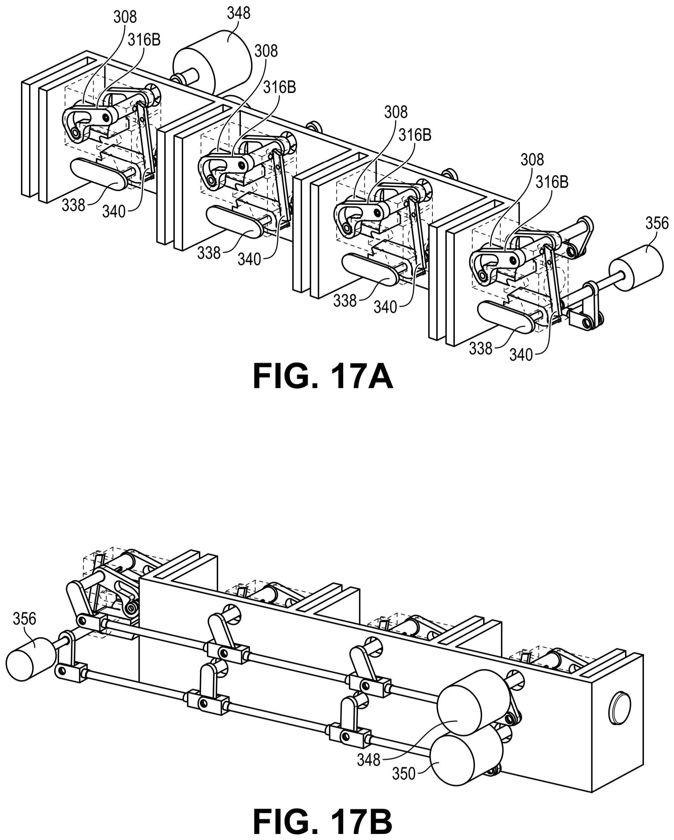

FIG. 17A shows a front perspective view of a series of latching and locking systems in a third subsequent partial retracted position and FIG. 17B shows a rear perspective view of latching and locking systems in a third subsequent partial retracted position according to examples of the present disclosure. As shown in FIG. 17A and FIG. 17B, the latching and locking system is in the unlocked but inhibited where inhibit lever 340 is inhibiting further motion at each of the four assemblies and sensor 352 monitors the lock linkage driveline starting motion and provides feedback to electronics, such as flight control electronics 2616 or flight computer 2620, indicating that locks have reached the "unlocked but inhibited" state, and first actuator 348 rotates first drivetrain 354 that disengages one or more of first primary locking cam 316A, second primary locking cam 316B, secondary locking cam 324, or tertiary locking cam 338. Until this state, flight control electronics 2616 or flight computer 2620 would have been commanded first actuator 348 to not move. Once the "unlocked but inhibited" state is reached, flight control electronics 2616 or flight computer 2620 would begin to command first actuator 348 to start unlocking first primary locking cam 316A and second primary locking cam 316B and unlatching each latch pin 308.

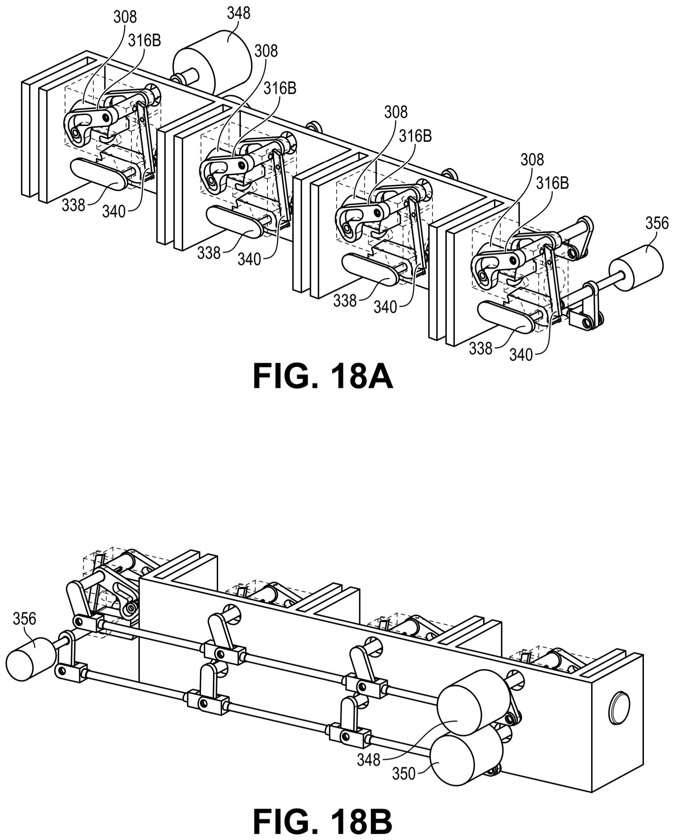

FIG. 18A shows a front perspective view of a series of latching and locking systems in a fourth subsequent partial retracted position and FIG. 18B shows a rear perspective view of latching and locking systems in a fourth subsequent partial retracted position according to examples of the present disclosure. As shown in FIG. 18A and FIG. 18B, the latching and locking system is in the unlocked but inhibited state where one or more of first primary locking cam 316A, second primary locking cam 316B, secondary locking cam 324, or tertiary locking cam 338 have reached the point where further rotation is inhibited by inhibit lever 340, inhibit lever 340 blocks further rotation of one or more of first primary locking cam 316A, second primary locking cam 316B, secondary locking cam 324, or tertiary locking cam 338, sensor 352 detects that one or more of first primary locking cam 316A, second primary locking cam 316B, secondary locking cam 324, or tertiary locking cam 338 have reached the "unlocked but inhibited" state, flight control electronics 2616 can now command first actuator 348, and first actuator 348 stops rotation, but continues to provide torque in the "unlock" direction. In some examples, a hydraulic power source or one or more electric motors can be used to actuate first actuator 348.

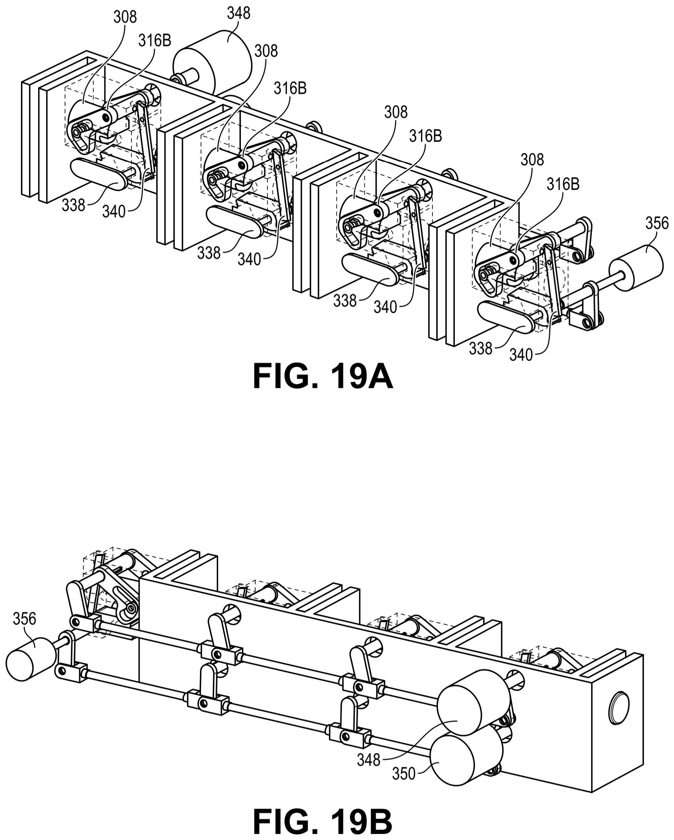

FIG. 19A shows a front perspective view of a series of latching and locking systems in a fifth subsequent partial retracted position and FIG. 19B shows a rear perspective view of latching and locking systems in a fifth subsequent partial retracted position according to examples of the present disclosure. As shown in FIG. 19A and FIG. 19B, the latching and locking system is in the unlatching state where inhibit lever 340 continues to block further rotation of one or more of first primary locking cam 316A, second primary locking cam 316B, secondary locking cam 324, or tertiary locking cam 338, the latch motor begins unlatching each latch pin 308, each latch pin 308 begins to retract, and first actuator 348 stops rotation, but continues to provide torque in the "unlock" direction. In some examples, a hydraulic power source or one or more electric motors can be used to actuate first actuator 348.

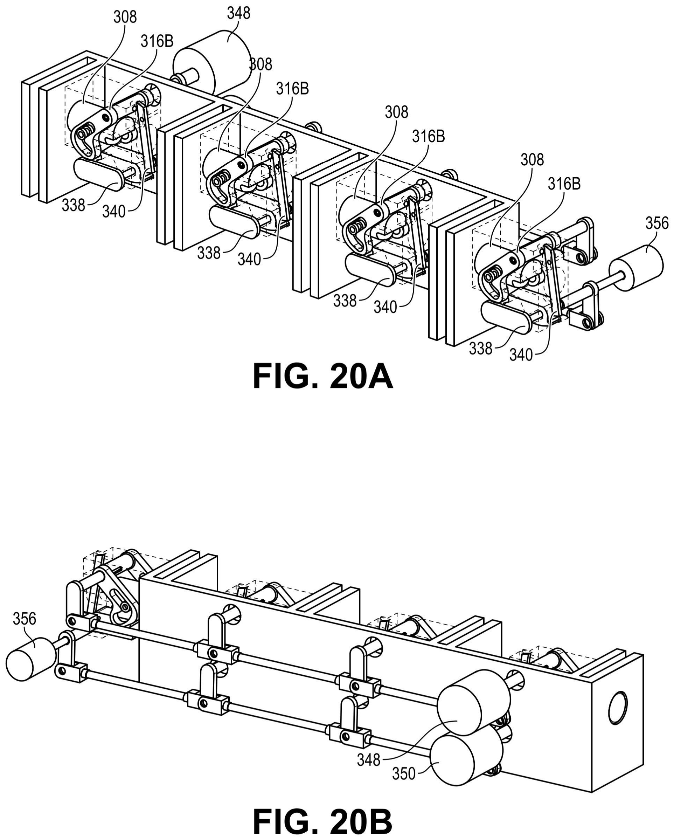

FIG. 20A shows a front perspective view of a series of latching and locking systems in a sixth subsequent partial retracted position and FIG. 20B shows a rear perspective view of latching and locking systems in a sixth subsequent partial retracted position according to examples of the present disclosure. As shown in FIG. 20A and FIG. 20B, the latching and locking system is in the unlatching state where inhibit lever 340 continues to block further rotation of one or more of first primary locking cam 316A, second primary locking cam 316B, , the latch motor continues unlatching each latch pin 308, each latch pin 308 continues to retract, and first actuator 348 stops rotation, but continues to provide torque in the "unlock" direction. In some examples, a hydraulic power source or one or more electric motors can be used to actuate first actuator 348.

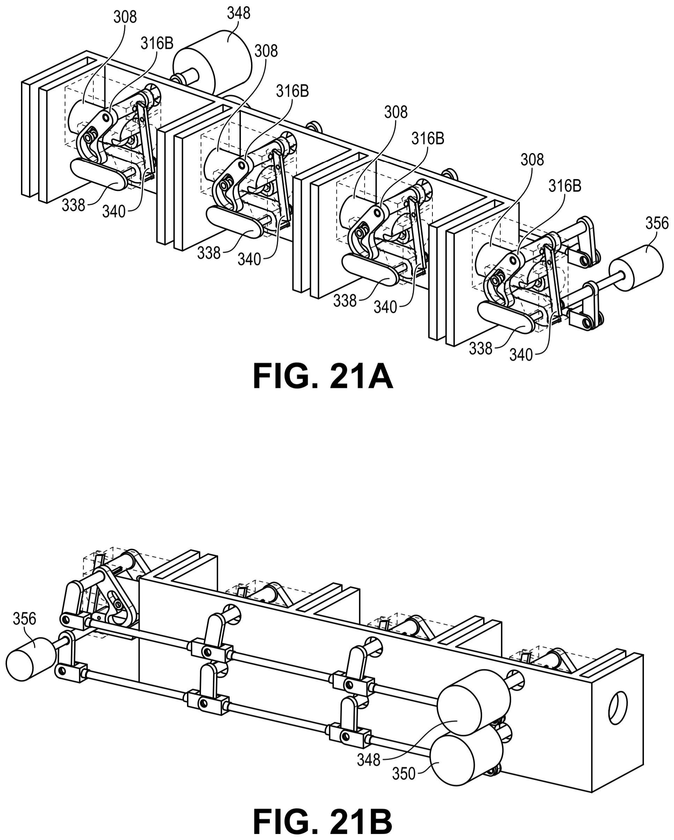

FIG. 21A shows a front perspective view of a series of latching and locking systems in a seventh subsequent partial retracted position and FIG. 21B shows a rear perspective view of latching and locking systems in a seventh subsequent partial retracted position according to examples of the present disclosure. As shown in FIG. 21A and FIG. 21B, the latching and locking system is in the unlatching state where inhibit lever 340 continues to block further rotation of one or more of first primary locking cam 316A, second primary locking cam 316B, the latch motor continues unlatching each latch pin 308, each latch pin 308 continues to retract, and first actuator 348 stops rotation, but continues to provide torque in the "unlock" direction. In some examples, a hydraulic power source or one or more electric motors can be used to actuate first actuator 348.

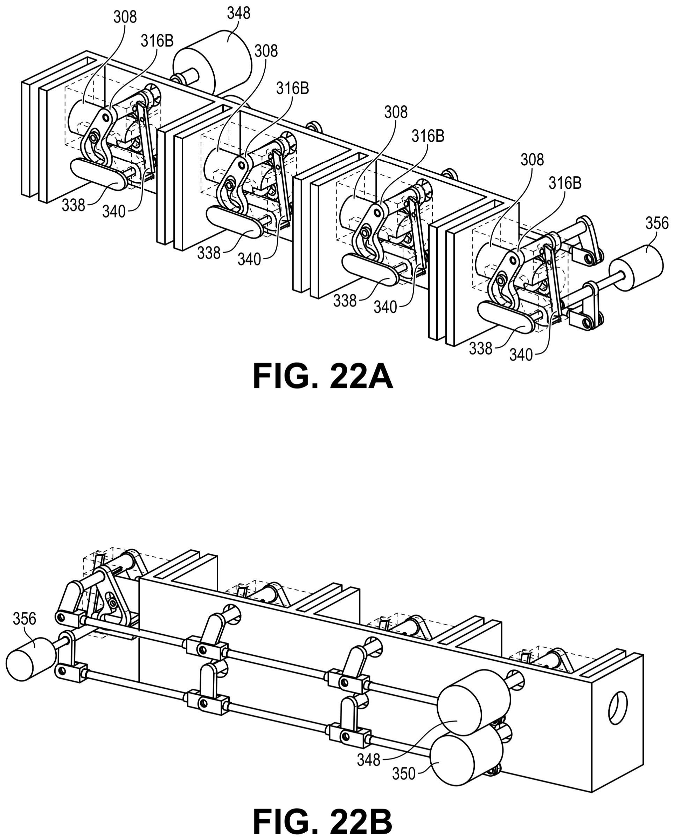

FIG. 22A shows a front perspective view of a series of latching and locking systems in an eighth subsequent partial retracted position and FIG. 22B shows a rear perspective view of latching and locking systems in an eighth subsequent partial retracted position according to examples of the present disclosure. As shown in FIG. 22A and FIG. 22B, the latching and locking system is in the unlatching state where inhibit lever 340 continues to block further rotation of one or more of first primary locking cam 316A, second primary locking cam 316B because the back end of latch pin 308 is in contact with inhibit lever 340, first actuator 348 continues unlatching each latch pin 308, each latch pin 308 continues to retract, and first actuator 348 stops rotation, but continues to provide torque in the "unlock" direction. In some examples, a hydraulic power source or one or more electric motors can be used to actuate first actuator 348.

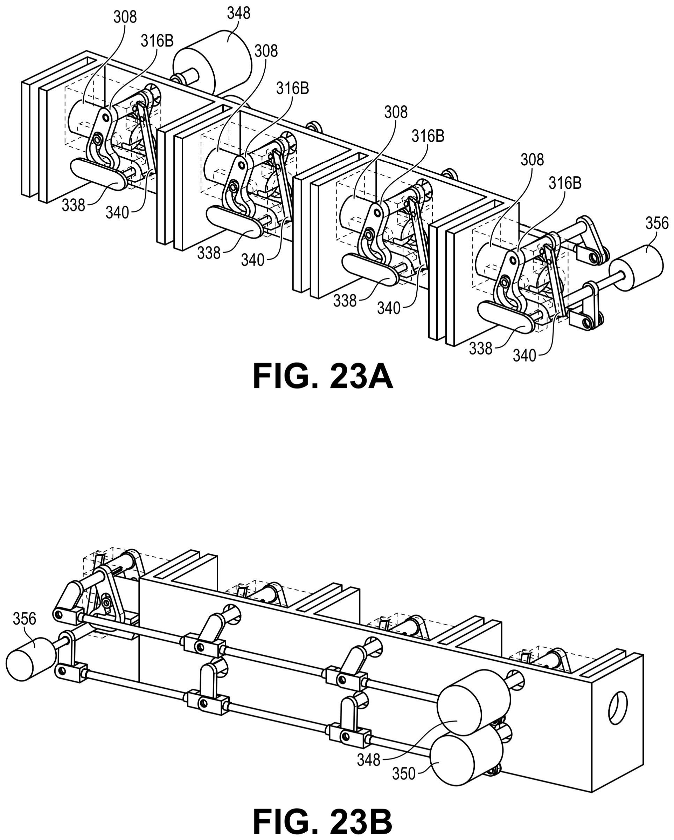

FIG. 23A shows a front perspective view of a series of latching and locking systems in a ninth subsequent partial retracted position and FIG. 23B shows a rear perspective view of latching and locking systems in a ninth subsequent partial retracted position according to examples of the present disclosure. As shown in FIG. 23A and FIG. 23B, the latching and locking system is in the unlatching state where inhibit lever 340 does not block further rotation of one or more of first primary locking cam 316A, second primary locking cam 316B, , second locking cam 324 has not started to move yet, actuator 348 continues unlatching each latch pin 308, each latch pin 308 continues to retract, and first actuator 348 stops rotation, but continues to provide torque in the "unlock" direction. In some examples, a hydraulic power source or one or more electric motors can be used to actuate the latch motor.

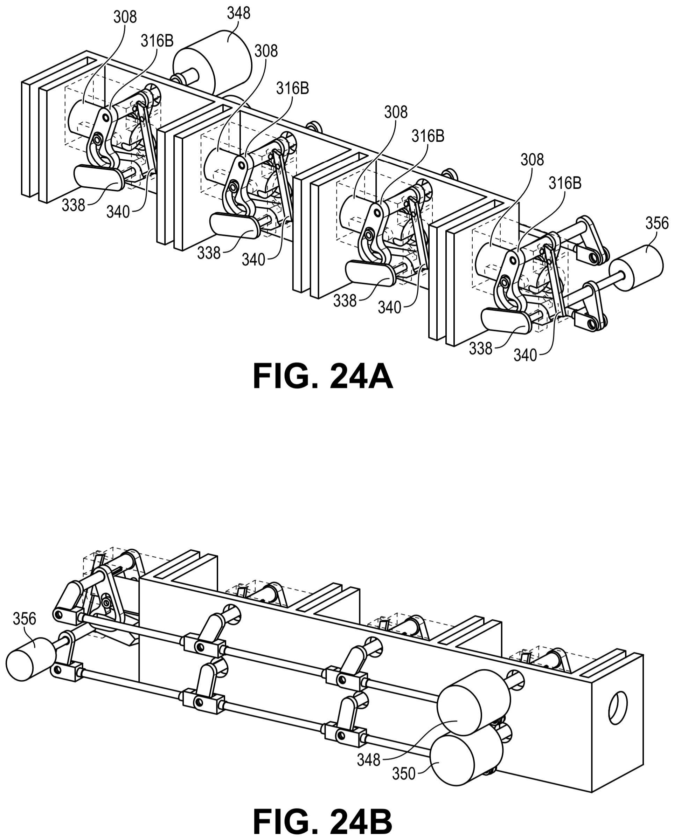

FIG. 24A shows a front perspective view of a series of latching and locking systems in a tenth subsequent partial retracted position and FIG. 24B shows a rear perspective view of latching and locking systems in a tenth subsequent partial retracted position according to examples of the present disclosure. As shown in FIG. 24A and FIG. 24B, the latching and locking system is in the unlatching state where inhibit lever 340 does not block further rotation of one or more of first primary locking cam 316A, second primary locking cam 316B, secondary locking cam 324, or tertiary locking cam 338, first second locking cam 324 and tertiary locking cam 338 are moving towards a final position, actuator 348 stops unlatching each latch pin 308, each latch pin 308 finishes retraction, and first actuator 348 stops rotation, but continues to provide torque in the "unlock" direction. In some examples, a hydraulic power source or one or more electric motors can be used to actuate one or more of: first actuator 348, second actuator 350, first drivetrain 354, or second drivetrain 355.

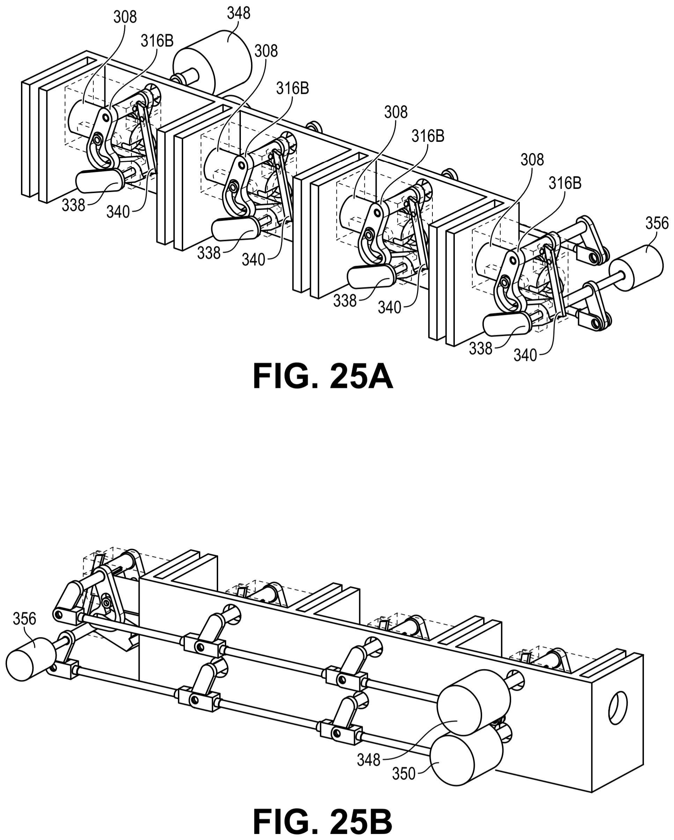

FIG. 25A shows a front perspective view of a series of latching and locking systems in a fully retracted position and FIG. 25B shows a rear perspective view of latching and locking systems in a fully retracted position according to examples of the present disclosure. As shown in FIG. 25A and FIG. 25B, the latching and locking system is in the unlatched and unlocked state where the lock cams reach the end of travel, sensor 352 detects that the system is "unlatched and unlocked," electronics, such as flight control electronics 2616 or flight computer 2620, can now command the system that folds the wing tip to begin rotating the wing tip, and first actuator 348 stops rotating. In some examples, a hydraulic power source or one or more electric motors can be used to actuate the latch motor.

In sequence as shown in FIG. 14A - FIG. 25B can be reversed to result in a latched and locked state by reversing each of the steps in the above sequences.

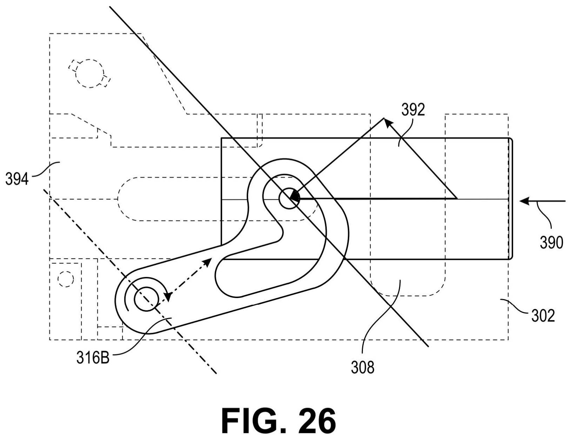

FIG. 26 shows a side view of the latching and locking system showing the arrangement of the hook, "J," or "j"-shaped on front primary locking cam 316A according to examples of the present disclosure. As shown in FIG. 26, due to the shape of the "J"-shape, when an external load, as shown by arrow 390, is provided to latch pin 308 along the long axis of load pin 308 that tends to backdrive load pin 308, a component of the backdriving force normal to a cam surface, as shown by arrow 392, creates a moment, as shown by arrow 394, that tends to drive second primary locking cam 316B in the "lock" direction.

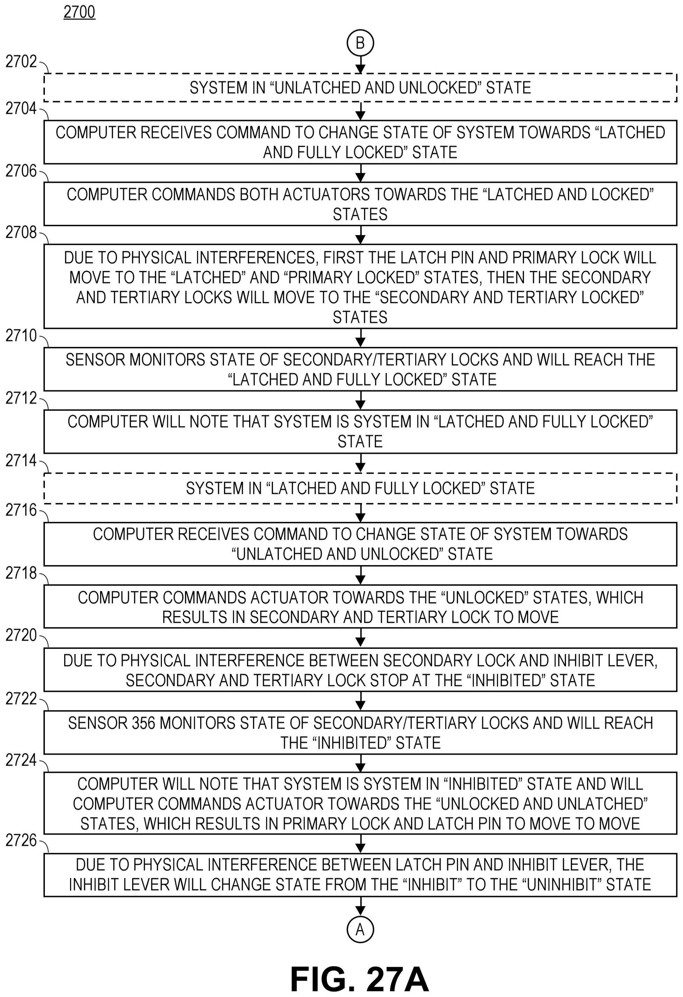

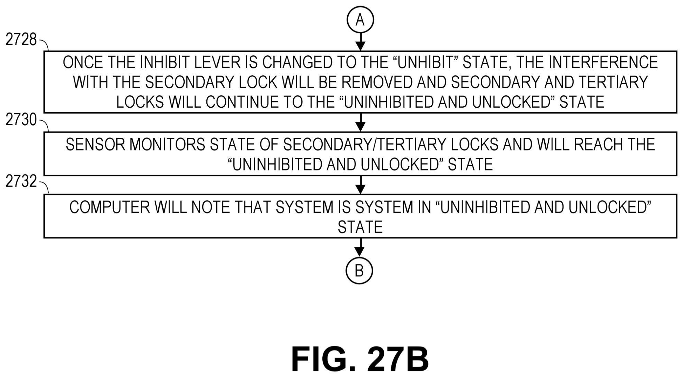

FIG. 27A and FIG. 27B show a flowchart 2700 for a method according to examples of the present disclosure. In this example, the method begins with the system in an "unlatched and unlocked" state, as in 2702. The method continues by receiving a command from a computer, e.g., flight control electronics 2616 or flight computer 2620, to change state of the system towards a "latched and fully locked" state, as in 2704. The method continues by commanding, by the computer, e.g., flight control electronics 2616 or flight computer 2620, both the actuators, e.g., first actuator 348 and second actuator 350, towards the "latched and locked" states, as in 2706. The method continues by moving, due to the physical interferences, the latch pin, e.g., latch pin 308, and primary lock, e.g., first primary locking cam 316A and second primary locking cam 316B, to the "latched" and "primary locked" states, then moving the secondary and tertiary locks, e.g., secondary locking cam 324 and tertiary locking cam 338, to the "secondary and tertiary locked" states, as in 2708. The method continues by monitoring, by the sensor 352, the state of the secondary/tertiary locks as they reach the "latched and fully locked" state, as in 2710. The method continues by determining, by the computer, e.g., flight control electronics 2616 or flight computer 2620, that the system is in a "latched and fully locked" state, as in 2712.

Once the system is in the "latched and fully locked" state, as in 2714, the method can begin or continue by receiving, from the computer, e.g., flight control electronics 2616 or flight computer 2620, a command to change a state of the system towards "unlatched and unlocked" state, as in 2716. The method continues by receiving, from the computer, e.g., flight control electronics 2616 or flight computer 2620, a command to actuate the actuator, e.g., second actuator 350, towards the "unlocked" states, which results in the secondary and the tertiary lock, e.g., secondary locking cam 324 and tertiary locking cam 338, moving, as in 2718. The method continues by stopping, due to physical interference between the secondary lock and the inhibit lever, e.g., inhibit lever 340, the secondary and the tertiary lock, e.g., secondary locking cam 324 and tertiary locking cam 338, stop at the "inhibited" state, as in 2720. The method continues by monitoring, by the sensor, e.g. sensor 352, the state of the secondary/tertiary locks until they reach the "inhibited" state, as in 2722. The method continues by determining, by the computer, e.g., flight control electronics 2616 or flight computer 2620, that the system is in the "inhibited" state and commanding, by the computer, e.g., flight control electronics 2616 or flight computer 2620, the actuator, e.g., first actuator 348, to move towards the "unlocked and unlatched" states, which results in the primary lock, e.g., first primary locking cam 316A and second primary locking cam 316B, and the latch pin, e.g., latch pin 308, to move, as in 2724. The method continues by, due to physical interference between the latch pin, e.g., latch pin 308, and the inhibit lever, e.g., inhibit lever 340, changing the state of the inhibit lever, e.g., inhibit lever 340, from the "inhibit" to the "uninhibit" state, as in 2726. The method continues, once the inhibit lever, e.g., inhibit lever 340, is changed to the "unhibit" state, removing the interference with the secondary lock, e.g., secondary locking cam 324, and the secondary and the tertiary locks, e.g., secondary locking cam 324 and tertiary locking cam 338, will continue to the "uninhibited and unlocked" state, as in 2728. The method continues by monitoring, by the sensor, e.g. sensor 352, the state of the secondary/tertiary locks, e.g., secondary locking cam 324 and tertiary locking cam 338, until they reach the "uninhibited and unlocked" state, as in 2730. The method continues by determining, by the computer, e.g., flight control electronics 2616 or flight computer 2620, that the system is in the "uninhibited and unlocked" state, as in 2732.

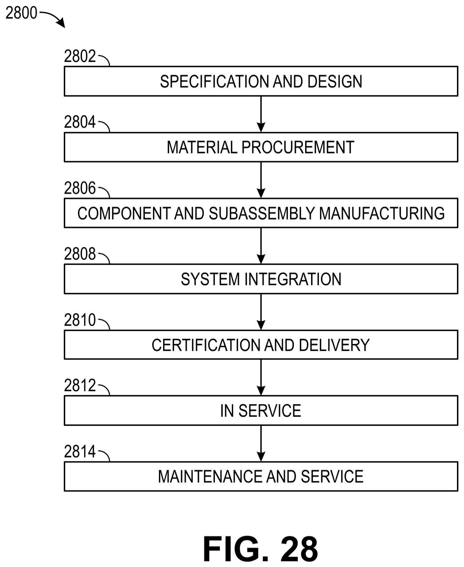

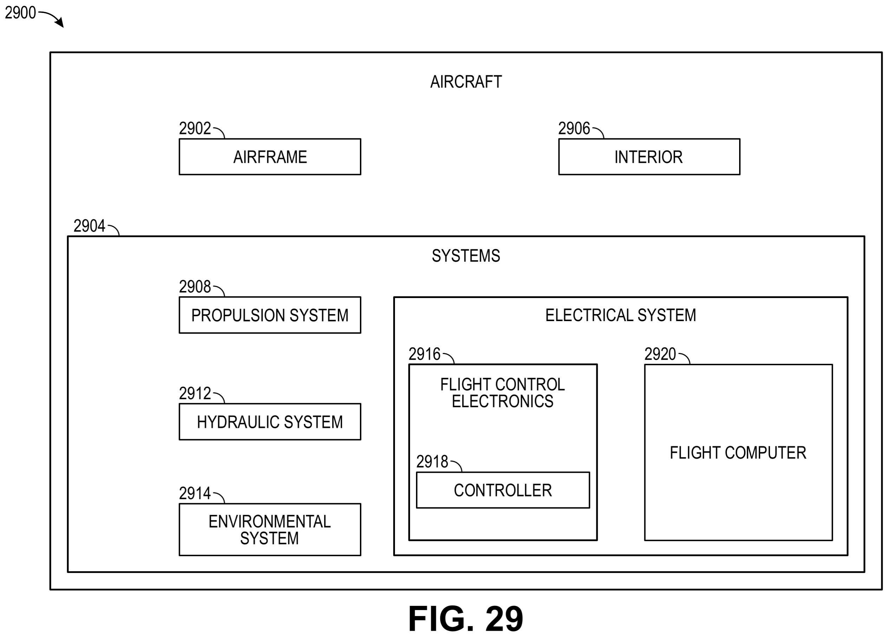

Illustrative embodiments of the disclosure may be described in the context of aircraft manufacturing and service method 2800 as shown in FIG. 28 and aircraft 2900 as shown in FIG. 29. Turning first to FIG. 28, FIG. 28 is an illustration of an aircraft manufacturing and service method in accordance with an illustrative embodiment. During pre-production, aircraft manufacturing and service method 2800 may include specification and design 2802 of aircraft 2900 in FIG. 29 and material procurement 2804.

During production, component and subassembly manufacturing 2806 and system integration 2808 of aircraft 2900 in FIG. 29 may take place. Thereafter, aircraft 2900 in FIG. 29 may go through certification and delivery 2810 in order to be placed in service 2812. While in service 2812, aircraft 2900 in FIG. 29 may be scheduled for routine maintenance and service 2814, which may include modification, reconfiguration, refurbishment, and other maintenance or servicing.

Each of the processes of aircraft manufacturing and service method 2800 may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to FIG. 29, FIG. 29 is an illustration of an aircraft in which an illustrative embodiment may be implemented. In this example, aircraft 2900 may be produced by aircraft manufacturing and service method 2900 in FIG. 29 and may include airframe 2902 with plurality of systems 2904 and interior 2906. Examples of systems 2904 include one or more of propulsion system 2908, electrical system 2910, hydraulic system 2912, and environmental system 2914. Any number of other systems may be included. For example, electrical system 2910 can include flight control electronics 2916. Flight control electronics 2916 can comprise controller 2918 for commanding the operation of the various systems/components disclosed herein, such as first actuator 348, second actuator 350, sensor 352, first drivetrain 354, and second drivetrain 355. Controller 2918 may include a processor. Flight control electronics 2916 can also comprise flight computer 2920 for providing various flight functions to an operator of aircraft 2900. Controller 2918 may communicate with flight computer 2920 to determine when to deploy or stow the foldable section. In some examples, controller 2908 may also include hydraulic valves that sequence one or more of first actuator 348, second actuator 350, sensor 352, first drivetrain 354, and second drivetrain 355. Apparatuses and methods embodied herein may be employed during at least one of the stages of aircraft manufacturing and service method 2800 in FIG. 28.

In one illustrative example, components or subassemblies produced in component and subassembly manufacturing 2806 in FIG. 28 may be fabricated or manufactured in a manner similar to components or subassemblies produced while aircraft 2900 may be in service 2812 in FIG. 28. As yet another example, one or more apparatus embodiments, method embodiments, or a combination thereof may be used during production stages, such as component and subassembly manufacturing 2806 and system integration 2808 in FIG. 28. One or more apparatus embodiments, method embodiments, or a combination thereof may be used while aircraft 2900 may be in service 2812 and/or during maintenance and service 2814 in FIG. 28. The use of a number of the different illustrative embodiments may substantially expedite the assembly of and/or may reduce the cost of aircraft 2900.

The flowcharts and block diagrams illustrate the architecture, functionality, and operation of some possible implementations of apparatuses and methods. In this regard, each block in the flowcharts or block diagrams may represent a module, a segment, a function, and/or a portion of an operation or step.

The function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram.

Examples of the present disclosure can be understood using one of more of the following clauses.
Clause 1.A latching and locking system comprising:
   a housing comprising a housing longitudinal aperture extending along and through housing and a housing transverse aperture extending below and along and through the housing;
   a latch pin sized to fit and move within the housing longitudinal aperture of the housing from a first unlatched position to a first latched position, wherein the latch pin comprises a first latch pin end having a latch pin edge portion and a second latch pin end;
   a first primary locking cam hinged by a primary hinge pin on a first exterior longitudinal surface of the housing that allows the first primary locking cam to move from a first unlocked position to a first locked position, wherein the first primary locking cam comprises a first open j-shaped or hook-shaped aperture with a first interior protrusion arranged at a first curve of the first open j-shaped or hook-shaped aperture;
   a second primary locking cam hinged by the primary hinge pin on a second exterior longitudinal surface of the housing that allows the second primary locking cam to move from a second unlocked position to a second locked position, wherein the second primary locking cam comprises a second open j-shaped or hook-shaped aperture with a second interior protrusion arranged at a second curve of the second open j-shaped or hook-shaped aperture;
   a secondary locking cam hinged by a second hinge pin on a first exterior transverse surface of the housing that allows the secondary locking cam to move from a secondary unlocked position to a secondary locked position, wherein the secondary locking cam comprises a fixed secondary locking cam end that is fixed by the second hinge pin and a movable secondary locking cam end having a terminal surface comprising a recessed portion that is contoured to mate with the latch pin edge portion of the latch pin;
   a tertiary locking cam hinged by the second hinge pin on the second exterior longitudinal surface of the housing that allows the tertiary locking cam to move from a first unlocked position to a first locked position that blocks the second primary locking cam from unlocking; and
   an inhibiting lever comprising a first inhibiting lever end that is contoured to mate with the recessed portion of the secondary locking cam end and a second inhibiting lever end, wherein the inhibiting lever rotates about an inhibiting lever axis that allows the inhibiting lever to move from a inhibit position to an uninhibit position,
   wherein the latch pin edge portion on the first latch pin end of the latch pin interacts with the inhibiting lever when the latch pin is in the unlatched position such that the inhibiting lever moves from the inhibit position to the uninhibit position.
Clause 2. The system of clause 1, further comprising a first drivetrain that drives the latch pin, the first primary locking cam, and the second primary locking cam.
Clause 3. The system of clause 1 or clause 2, further comprising a second drivetrain that drives the second lock cam and the tertiary lock cam.
Clause 4. The system of any of clauses 1-3, further comprising a first actuator configured to move the latch pin from the first unlatched position to the first latched position and the first primary locking cam and the second primary locking cam from the unlocked position to the locked position via actuating the latch pin, the first primary locking cam, and the second primary locking cam by the first drivetrain.
Clause 5. The system of any of clauses 1-4, further comprising a second actuator configured to move the secondary lock cam and the tertiary lock cam from the first unlocked position to the first locked position via actuating the second drivetrain.
Clause 6. The system of any of clauses 1-5, further comprising a sensor configured to detect a position of the first actuator and the second drivetrain.
Clause 7. The system of any clauses 1-6, wherein the first primary locking cam and the second primary locking cam are mechanically joined by the primary hinge pin such that the first primary locking cam and the second primary locking cam rotate together.
Clause 8. The system of any of clauses 1-7, wherein the secondary locking cam and the tertiary locking cam are mechanically joined by the second hinge pin such that the secondary locking cam and the tertiary locking cam rotate together.
Clause 9. The system of any of clauses 1-8, wherein the latch pin latches a first fixed wingtip portion to a first folding wingtip portion.
Clause 10. The system of any of clauses 1-9, further comprising a first roller bearing configured to connect the first primary locking cam to the first exterior longitudinal surface of the housing and a second roller bearing configured to connect the second primary locking cam to the second longitudinal surface of the housing.
Clause 11. The system of any of clauses 1-10, wherein the first open j-shaped or hook-shaped aperture is shaped such that backdriving forces tending to unlatch the latch pin would increase a degree of locking provided by the first primary locking cam and the second primary locking cam. Clause 12. The system of any of clauses 1-11, wherein a physical interaction of the tertiary locking cam and the first primary locking cam and the second primary locking cam prohibits the tertiary locking cam from reaching a locked state unless the first primary locking cam and the second primary locking cam are first in the locked state.
Clause 13. The system of any of clauses 1-12, wherein the sensor monitors a state of the tertiary locking cam to infer a state of the first primary locking cam and the second primary locking cam. Clause 14. The system of any of clauses 1-13, wherein a physical interaction of the secondary locking cam and the latch pin prohibits the secondary locking cam from reaching a locked state unless the latch pin in fully latched.
Clause 15. The system of any of clauses 1-14, wherein the sensor monitors a state of the secondary locking cam to infer a state of the latch pin.
Clause 16. The system of any of clauses 1-15, wherein the secondary locking cam and the tertiary locking cam are on a common shaft and rotate together.
Clause 17. A method of latching and locking a locking system, the method comprising:
   receiving a command from a computer to change a state of a locking system from a unlatch and unlocked state to a latched and fully locked state;
   commanding, by the computer, a first actuator and a second actuator towards the latched and locked states;
   moving a latch pin and a first primary lock and a second primary lock to a latched state and a primary lock state and then moving a secondary lock and a tertiary lock to a secondary and a tertiary locked state;
   monitoring, by a sensor, a state of the secondary lock and the tertiary lock as the secondary lock and the tertiary lock reach the latched and fully locked state; and
   determining, by the computer, that the locking system is in the latched and fully locked state.
Clause 18. The method of clause 17, wherein the locking system locks or unlocks a wingtip in a particular position relative to main body of an airplane wing.
Clause 19. A method of unlatching and unlocking a locking system, the method comprising:
   receiving, from a computer, a command to change a state of a locking system from latched and fully locked state to an unlatched and unlocked state;
   receiving, from the computer, a command to actuate a second actuator towards an unlocked state, which results in a secondary lock and a tertiary lock moving;
   stopping, due to physical interference between the secondary lock and an inhibit lever, the secondary lock and the tertiary lock, at an inhibited state;
   monitoring, by a sensor, a state of the secondary lock and the tertiary lock until the secondary lock and the tertiary lock reach the inhibited state;
   determining, by the computer, that the locking system is in the inhibited state and commanding, by the computer, a first actuator, to move towards the unlocked and unlatched state, which results in a primary lock and a latch pin moving;
   changing a state of an inhibit lever from an inhibit state to an uninhibit state due to physical interference between the latch pin and the inhibit lever;
   once the inhibit lever is changed to an unhibit state, removing interference with the secondary lock and the tertiary lock to continue to the uninhibited and unlocked state;
   monitoring, by the sensor, a state of the secondary lock the tertiary locks until the second lock and the tertiary lock reach the uninhibited and unlocked state; and
   determining, by the computer, that the locking system is in the uninhibited and unlocked state.
Clause 20. The method of clause 19, wherein the locking system locks or unlocks a wingtip in a particular position relative to main body of an airplane wing.
Clause 21. A latching and locking system comprising:
   a housing;
   a latch pin sized to fit and move within a housing longitudinal aperture of the housing from a first unlatched position to a first latched position;
   a primary locking cam comprising lock components arranged on both sides of the housing and arranged to move from a first unlocked position to a first locked position
   a secondary locking cam arranged to move from a secondary unlocked position to a secondary locked position;
   a tertiary locking cam arranged to move from a first unlocked position to a first locked position that blocks the second primary locking cam from unlocking; and
   an inhibiting lever arranged to rotate about an inhibiting lever axis that allows the inhibiting lever (340) to move from a inhibit position to an uninhibit position,
   wherein the latch pin (308) interacts with the inhibiting lever when the latch pin is in the unlatched position such that the inhibiting lever moves from the inhibit position to the uninhibit position.
Clause 22. The system of clause 21, wherein a first primary locking cam of the primary locking cam comprises a first open j-shaped or hook-shaped aperture with a first interior protrusion arranged at a first curve of the first open j-shaped or hook-shaped aperture.
Clause 23. The system of clause 21 or clause 22, wherein the second primary locking cam of the primary locking cam comprises a second open j-shaped or hook-shaped aperture with a second interior protrusion arranged at a second curve of the second open j-shaped or hook-shaped aperture. Clause 24. The system of any of clauses 21-23, further comprising a first drivetrain that drives the latch pin, the first primary locking cam, and the second primary locking cam.
Clause 25. The system of any of clauses 21-24, further comprising a second drivetrain that drives the second lock cam and the tertiary lock cam.
Clause 26. The system of any of clauses 21-25, further comprising a first actuator configured to move the latch pin from the first unlatched position to the first latched position and the first primary locking cam and the second primary locking cam from the unlocked position to the locked position via actuating the latch pin, the first primary locking cam, and the second primary locking cam by the first drivetrain.
Clause 27. The system of any of clauses 21-26, further comprising a second actuator (350) configured to move the secondary lock cam and the tertiary lock cam from the first unlocked position to the first locked position via actuating the second drivetrain.
Clause 28. The system of any of clauses 21-27, further comprising a sensor configured to detect a position of the first actuator and the second drivetrain.
Clause 29. The system of any of clauses 21-28, wherein the first primary locking cam and the second primary locking cam are mechanically joined by the primary hinge pin such that the first primary locking cam and the second primary locking cam rotate together.
Clause 30. The system of any of clauses 21-29, wherein the secondary locking cam and the tertiary locking cam are mechanically joined by the primary hinge pin such that the secondary locking cam and the tertiary locking cam rotate together.
Clause 31. The system of any of clauses 21-30, wherein the latch pin latches a first fixed wingtip portion to a first folding wingtip portion.
Clause 32. The system of any of clauses 21-31, further comprising a first roller bearing configured to connect the first primary locking cam to the first exterior longitudinal surface of the housing and a second roller bearing configured to connect the second primary locking cam to the second longitudinal surface of the housing.
Clause 33. The system of any of clauses 21-32, wherein the first open j-shaped or hook-shaped aperture is shaped such that backdriving forces tending to unlatch the latch pin would increase a degree of locking provided by the first primary locking cam and the second primary locking cam. Clause 34. The system of any of clauses 21-33, wherein a physical interaction of the tertiary locking cam and the first primary locking cam and the second primary locking cam prohibits the tertiary locking cam from reaching a locked state unless the first primary locking cam and the second primary locking cam are first in the locked state.
Clause 35. The system of any of clauses 21-34, wherein the sensor monitors a state of the tertiary locking cam to infer a state of the first primary locking cam and the second primary locking cam. Clause 36. The system of any of clauses 21-35, wherein a physical interaction of the secondary locking cam and the latch pin prohibits the secondary locking cam from reaching a locked state unless the latch pin in fully latched.

The description of the different illustrative embodiments has been presented for purposes of illustration and description, and may be not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected may be chosen and described in order to best explain the principles of the embodiments, the practical application, and to enable others of ordinary skill in the art to understand the disclosure for various embodiments with various modifications as may be suited to the particular use contemplated.

While the foregoing disclosure has been described in some detail by way of illustration and example for purposes of clarity and understanding, it will be clear to one of ordinary skill in the art from a reading of this disclosure that various changes in form and detail can be made without departing from the true scope of the disclosure and may be practiced within the scope of the appended claims. For example, all the methods, systems, and/or component parts or other aspects thereof can be used in various combinations. All patents, patent applications, websites, other publications or documents, and the like cited herein are incorporated by reference in their entirety for all purposes to the same extent as if each individual item were specifically and individually indicated to be so incorporated by reference.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements. Moreover, all ranges disclosed herein are to be understood to encompass any and all sub-ranges subsumed therein.

While the present teachings have been illustrated with respect to one or more implementations, alterations and/or modifications can be made to the illustrated examples without departing from the spirit and scope of the appended claims. In addition, while a particular feature of the present teachings may have been disclosed with respect to only one of several implementations, such feature may be combined with one or more other features of the other implementations as may be desired and advantageous for any given or particular function. As used herein, the terms "a", "an", and "the" may refer to one or more elements or parts of elements. As used herein, the terms "first" and "second" may refer to two different elements or parts of elements. As used herein, the term "at least one of A and B" with respect to a listing of items such as, for example, A and B, means A alone, B alone, or A and B. Those skilled in the art will recognize that these and other variations are possible. Furthermore, to the extent that the terms "including," "includes," "having," "has," "with," or variants thereof are used in either the detailed description and the claims, such terms are intended to be inclusive in a manner similar to the term "comprising." Further, in the discussion and claims herein, the term "about" indicates that the value listed may be somewhat altered, as long as the alteration does not result in nonconformance of the process or structure to the intended purpose described herein. Finally, "exemplary" indicates the description is used as an example, rather than implying that it is an ideal.

It will be appreciated that variants of the above-disclosed and other features and functions, or alternatives thereof, may be combined into many other different systems or applications. Various presently unforeseen or unanticipated alternatives, modifications, variations, or improvements therein may be subsequently made by those skilled in the art which are also intended to be encompasses by the following claims.

The examples set forth herein represent the necessary information to enable those skilled in the art to practice the embodiments and illustrate the best mode of practicing the embodiments. Upon reading the description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. As used herein, the term "and/or" includes any and all combinations of one or more of the associated listed items.

Spatially relative terms, such as "beneath," "below," "lower," "above," "upper," and the like may be used herein for ease of description to describe the relationship of one component and/or feature to another component and/or feature, or other component(s) and/or feature(s), as illustrated in the drawings. It will be understood that the spatially relative terms are intended to encompass different orientations of the device in use or operation in addition to the orientation(s) depicted in the figures.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

## Claims

1. A latching and locking system (300) comprising:
a housing (302);
a latch pin (308) sized to fit and move within a housing longitudinal aperture (304) of the housing (302) from a first unlatched position to a first latched position;
a primary locking cam (316A, 316B) comprising lock components arranged on both sides of the housing and arranged to move from a first unlocked position to a first locked position;
a secondary locking cam (324) arranged to move from a secondary unlocked position to a secondary locked position;
a tertiary locking cam (338) arranged to move from a first unlocked position to a first locked position that blocks the primary locking cam (316A, 316B) from unlocking; and
an inhibiting lever (340) arranged to rotate about an inhibiting lever axis (346) that allows the inhibiting lever (340) to move from a inhibit position to an uninhibit position,
wherein the latch pin (308) interacts with the inhibiting lever (340) when the latch pin (308) is in the unlatched position such that the inhibiting lever (340) moves from the inhibit position to the uninhibit position.

2. The system (300) of claim 1, wherein a first primary locking cam (316A) of the primary locking cam comprises a first open j-shaped or hook-shaped aperture with a first interior protrusion (322A) arranged at a first curve of the first open j-shaped or hook-shaped aperture, wherein preferably the second primary locking cam (316B) of the primary locking cam comprises a second open j-shaped or hook-shaped aperture with a second interior protrusion (322B) arranged at a second curve of the second open j-shaped or hook-shaped aperture.

3. The system (300) of any one of claims 1 to 3, further comprising a first drivetrain (354) that drives the latch pin (308), the first primary locking cam (316A), and the second primary locking cam (316B), wherein the system (300) preferably further comprises a second drivetrain (355) that drives the second lock cam (324) and the tertiary lock cam (338).

4. The system (300) of claim 3, further comprising a first actuator (348) configured to move the latch pin (308) from the first unlatched position to the first latched position and the first primary locking cam (316A) and the second primary locking cam (316B) from the unlocked position to the locked position via actuating the latch pin (308), the first primary locking cam (316A), and the second primary locking cam (316B) by the first drivetrain (354).

5. The system (300) of claim 3 or 4, further comprising a second actuator (350) configured to move the secondary lock cam (324) and the tertiary lock cam (338) from the first unlocked position to the first locked position via actuating the second drivetrain (355).

6. The system (300) of claim 4, further comprising a sensor (352) configured to detect a position of the first actuator (348) and the second drivetrain (355), wherein the sensor (352) preferably monitors a state of the tertiary locking cam (338) to infer a state of the first primary locking cam (316A) and the second primary locking cam (316B); and/or wherein preferably a physical interaction of the secondary locking cam (316B) and the latch pin (308) prohibits the secondary locking cam (316B) from reaching a locked state unless the latch pin (308) in fully latched.

7. The system (300) of any one of claims 1 to 6, wherein the first primary locking cam (316A) and the second primary locking cam (316B) are mechanically joined by the primary hinge pin (364) such that the first primary locking cam (316A) and the second primary locking cam (316B) rotate together.

8. The system (300) of any one of claims 1 to 7, wherein the secondary locking cam (324) and the tertiary locking cam (338) are mechanically joined by the primary hinge pin (318) such that the secondary locking cam (324) and the tertiary locking cam (338) rotate together.

9. The system (300) of any one of claims 1 to 8, wherein the latch pin (308) latches a first fixed wingtip portion to a first folding wingtip portion.

10. The system (300) of any one of claims 1 to 9, further comprising a first roller bearing (362A) configured to connect the first primary locking cam (316A) to the first exterior longitudinal surface (320A) of the housing (302) and a second roller bearing (362B) configured to connect the second primary locking cam (316B) to the second longitudinal surface (320B) of the housing (302).

11. The system (300) of claim 2, wherein the first open j-shaped or hook-shaped aperture is shaped such that backdriving forces tending to unlatch the latch pin would increase a degree of locking provided by the first primary locking cam and the second primary locking cam (316B).

12. The system (300) of claim 2 or 11, wherein a physical interaction of the tertiary locking cam (338) and the first primary locking cam (316A) and the second primary locking cam (316B) prohibits the tertiary locking cam (338) from reaching a locked state unless the first primary locking cam (316A) and the second primary locking cam (316B) are first in the locked state.

13. A method of latching and locking a locking system, the method comprising:
receiving (3704) a command from a computer (2616, 2620) to change a state of a locking system from a unlatch and unlocked state to a latched and fully locked state;
commanding (3706), by the computer (2616, 2620), a first actuator (348) and a second actuator (350) towards the latched and locked states;
moving (3708) a latch pin (308) and a first primary lock (316A) and a second primary lock (316B) to a latched state and a primary lock state and then moving a secondary lock (324) and a tertiary lock (338) to a secondary and a tertiary locked state;
monitoring (3710), by a sensor (352), a state of the secondary lock (324) and the tertiary lock (338) as the secondary lock (324) and the tertiary lock (338) reach the latched and fully locked state; and
determining (3712), by the computer (2616, 2620), that the locking system is in the latched and fully locked state.

14. A method of unlatching and unlocking a locking system, the method comprising:
receiving (3716), from a computer (2616, 2620), a command to change a state of a locking system from latched and fully locked state to an unlatched and unlocked state;
receiving (3718), from the computer (2616, 2620), a command to actuate a second actuator (350) towards an unlocked state, which results in a secondary lock (324) and a tertiary lock (338) moving;
stopping (3720), due to physical interference between the secondary lock (324) and an inhibit lever, the secondary lock (324) and the tertiary lock (338), at an inhibited state;
monitoring (3722), by a sensor (352), a state of the secondary lock (324) and the tertiary lock until the secondary lock (324) and the tertiary lock (338) reach the inhibited state;
determining (3724), by the computer (2616, 2620), that the locking system is in the inhibited state and commanding, by the computer (2616, 2620), a first actuator (348), to move towards the unlocked and unlatched state, which results in a primary lock (316A, 316B) and a latch pin (308) moving;
changing (3726) a state of an inhibit lever (340) from an inhibit state to an uninhibit state due to physical interference between the latch pin (308) and the inhibit lever;
once the inhibit lever (340) is changed to an unhibit state (2728), removing interference with the secondary lock (324) and the tertiary lock (338) to continue to the uninhibited and unlocked state;
monitoring (2730), by the sensor (352), a state of the secondary lock (324) the tertiary lock (338) until the second lock (324) and the tertiary lock (338) reach the uninhibited and unlocked state; and
determining (2732), by the computer (2616, 2620), that the locking system is in the uninhibited and unlocked state.

15. The method of claim 13 or 14, wherein the locking system locks or unlocks a wingtip in a particular position relative to main body of an airplane wing.
